(19) Europäisches Patentamt
European Patent Office
Office européen des brevets

(11) EP 3 316 021 A1

(12) EUROPÄISCHE PATENTANMELDUNG

(43) Veröffentlichungstag:
**02.05.2018 Patentblatt 2018/18**

(51) Int Cl.:
***G02C 7/02*** *(2006.01)* ***G02C 7/10*** *(2006.01)*
***G02C 11/00*** *(2006.01)*

(21) Anmeldenummer: **16206865.4**

(22) Anmeldetag: **23.12.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Carl Zeiss Vision International GmbH**
**73430 Aalen (DE)**

(72) Erfinder: **ELLENRIEDER, MArc**
**73431 Aalen (DE)**

(74) Vertreter: **Gauss, Nikolai et al**
**Pfiz/Gauss Patentanwälte PartmbB**
**Tübingerstraße 26**
**70178 Stuttgart (DE)**

Bemerkungen:
Geänderte Patentansprüche gemäss Regel 137(2) EPÜ.

# (54) KOMPONENTE FÜR EINE BRILLE MIT DETEKTOR FÜR DAS ERFASSEN EINER UV-LICHT-STRAHLENDOSIS

(57) Die Erfindung betrifft eine Komponente für eine Brille (10'), wobei die Komponente ein Brillenglas (12) oder eine Brillenfassung (16) ist, mit einem Detektor (20) für das Erfassen einer von einem Brillenträger aus dem UV-Licht aufgenommenen Strahlendosis und mit einer Strahlendosisanzeige (22) für das Anzeigen der von dem Brillenträger aus dem UV-Licht aufgenommenen Strahlendosis. Der Detektor (20) enthält ein Detektormaterial (28), das bei Beaufschlagen mit UV-Licht eine Verfärbung erfährt, die von der Strahlungsenergie abhängig ist, die das Detektormaterial (28) bei Beaufschlagen mit UV-Licht aus dem UV-Licht dabei aufnimmt, wobei die Strahlendosisanzeige (22) eine Anzeigefläche hat, an der die Farbe des Detektormaterials sichtbar ist. Die Anzeigefläche hat einen Flächenrand (29), der die Anzeigefläche auf einen Teilbereich der dem Brillenträger abgewandten optisch wirksamen Fläche des Brillenglases (12) oder auf einen Teilbereich der Oberfläche der das Brillenglas (12) aufnehmenden Fassung (16) begrenzt.

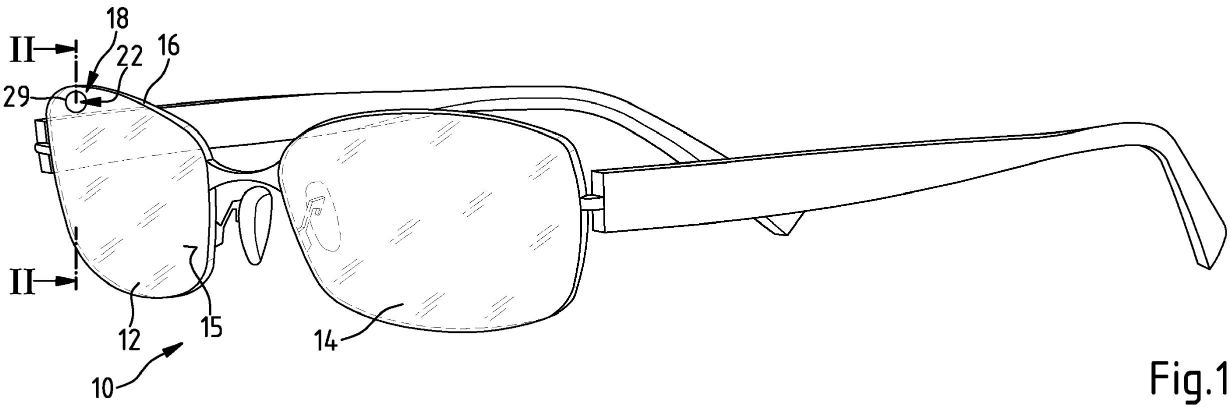


Fig.1

EP 3 316 021 A1

## Beschreibung

Die Erfindung betrifft eine Komponente für eine Brille, nämlich ein Brillenglas oder eine Brillenfassung, mit einem Detektor für das Erfassen einer von einem Brillenträger aus dem UV-Licht aufgenommenen Strahlendosis und mit einer Strahlendosisanzeige für das Anzeigen der von dem Brillenträger aus dem UV-Licht aufgenommenen Strahlendosis.

Unter dem Erfassen einer aus dem UV-Licht aufgenommenen Strahlendosis wird vorliegend das Erfassen der Energiedosis oder Äquivalentdosis von elektromagnetischer Strahlung verstanden, deren Wellenlänge $\lambda$ im ultravioletten Spektralbereich liegt, d. h. 100 nm $\leq \lambda \leq$ 400 nm.

Die UV-Strahlung im Sonnenlicht ist von Bedeutung für die menschliche Gesundheit. Die Energie der UV-Strahlung ist einerseits wichtig, um in der menschlichen Haut die Substanz Cholecalciferol aus Cholesterin zu bilden, wodurch Mangelerscheinungen wie z. B. Rachitis vorgebeugt wird. In zu hohen Dosen jedoch ist die Wirkung von UV-Strahlung für den Menschen schädlich, da sie in biologischen Molekülen Atombindungen zerstören kann. In der DNA verursacht UV-Strahlung z. B. Strangbrüche, was das Risiko von Hauttumoren erhöht. Eine für den Menschen schädliche Wirkung von UV-Strahlung ist es auch, Proteine zu denaturieren und Kollagenfasern in der Haut zu zerstören, mit der Folge, dass diese schneller altert. In hohen Dosen führt UV-Strahlung auf der menschlichen Haut zu Verbrennungserscheinungen, d. h. Sonnenbrand.

Medizinische Empfehlungen, durch Vorgeben der Aufenthaltsdauer im Sonnenlicht die Belastung der Haut mit UV-Strahlung zu begrenzen, werden oftmals nicht eingehalten und machen nur Sinn, wenn diese insbesondere den Einfallswinkel des Sonnenlichts auf die Erde und die Meereshöhe berücksichtigen. Vor diesem Hintergrund ist es wünschenswert, die Strahlendosis zu messen, die von einer Person durch den Aufenthalt im Sonnenlicht aufgenommen wird.

Für das Messen der mit dem UV-Licht der Sonne aufgenommenen Strahlendosis sind Armbänder mit einem Detektor bekannt. Der Detektor ist dabei ein Abschnitt der Armbänder, der ein Detektormaterial mit einem photochromen Farbstoff aufweist, dessen Farbe bei Beaufschlagen mit UV-Licht abhängig von der hierdurch aufgenommenen Strahlendosis verändert wird.

In der US 7,500,746 B1 ist eine Brille der eingangs genannten Art mit einem Dosimeter für UV-Licht beschrieben. Das Dosimeter ist hier an der die Brillengläser aufnehmenden Fassung auf einem Brillenbügel angeordnet. Das Dosimeter enthält einen auf einer Leiterplatte angeordneten elektrischen Detektor und hat eine Leuchtdioden (LED) - oder Flüssigkristall (LCD) - Anzeige für das Sichtbarmachen der Strahlendosis, die von dem Detektor im ultravioletten Spektralbereich aus dem Sonnenlicht aufgenommen wird. Das Dosimeter ermöglicht zwar mittels des elektrischen Detektors ein genaues Messen von Strahlendosen. Um aber eine zuverlässige Dosimeterfunktion auch bei rauen Umweltbedingungen sicherzustellen, müssen dessen elektrische Baugruppen insbesondere vor Nässe und Feuchte geschützt werden.

Darüber hinaus sind auch Brillengläser bekannt, die sich bei Beaufschlagen mit UV-Licht von selbst eindunkeln. Solche Brillengläser enthalten einen photochromen Farbstoff und werden von der Firma Carl Zeiss als Brillengläser mit PhotoFusion® Technologie angeboten.

Ein photochromer Farbstoff ist ein Farbstoff, dessen Farbe und lichttransmittive Eigenschaft bei Beaufschlagen mit Licht in einem definierten Wellenlängenbereich veränderbar ist. Fotochrome Farbstoffe, die z. B. für die Herstellung von selbsttönenden Brillengläsern eingesetzt werden können, sind z. B.

in der DE 36 22 871 A1 auf S. 3, Z. 41 bis 62 und in der US 5,728,758 in Sp. 6, Z. 41 bis Sp. 8, Z. 4, der US 5,624,757 in Sp. 5, Z. 52 bis Sp. 9, Z. 33, in der der DE 42 20 251 A1 auf S. 5, Z. 5 bis 16 sowie in der US 4,556,605 in Sp. 6, Z. 1 bis 6 beschrieben.

Die selbsttönenden Brillengläser mit der PhotoFusion® Technologie aus dem Hause Carl Zeiss haben einen mit einem Farbstoff versetzten Brillenglaskörper oder einen Brillenglaskörper mit einer Beschichtung, die einen Farbstoff enthält, dessen Farbe und/oder Transmission abgestimmt auf die Helligkeit der Umgebung automatisch verändert wird. Selbsttönende Brillengläser gibt es in unterschiedlichen Farben sowohl als Silikatgläser als auch als Kunststoffgläser. Die gewünschte Verfärbung von Silikatgläsern bei Beaufschlagen mit UV-Licht lässt sich erreichen, indem das Glas des Brillenglaskörpers mit Silberhalogeniden, z. B. Silberchromid und/oder Silberbromid versetzt wird. Abhängig von der Intensität bewirkt UV-Licht in dem Wellenlängenbereich 300 nm $\leq \lambda \leq$ 400 nm eine reversible chemische Umwandlung dieser Stoffe und infolgedessen ein Eindunkeln, was zu einer Steigerung des Absorptionsgrads des Brillenglaskörpers führt. Nimmt die Intensität des das Brillenglas beaufschlagenden UV-Lichts ab, hellen die Gläser wieder auf. Geschwindigkeit und Dunkelgrad der Verfärbung sind dabei auch abhängig von der Brillenglastemperatur. Je geringer die Temperatur ist, desto schneller ist der Prozess des Eindunkelns und umso dunkler wird das Glas.

Selbsttönende Brillengläser aus Kunststoff können als photochromer Farbstoff sogenannte Indolino-Spironaphthoxazine enthalten. Die Moleküle dieser Substanzklasse verändern bei Wechselwirkung mit UV-Licht oder mit kurzwelligem blauem Licht reversibel ihre chemische Struktur. Selbsttönende Brillengläser aus Kunststoff können z. B. dadurch geschaffen werden, dass Moleküle der vorgenannten Substanzklasse dem Kunststoff beim Gießen der Gläser beigemengt werden.

Selbsttönende Brillengläser nach der PhotoFusion® Technologie aus dem Hause Carl Zeiss z. B. passen sich automatisch den Lichtverhältnissen an: In nur 15 bis 30 Sekunden dunkeln sie sich ein, wenn eine Person mit einer Brille, die diese Brillengläser enthält, beispielsweise aus einem Cafe, einem Geschäft oder aus dem Büro ins sonnige Freie tritt. Umgekehrt hellen sich diese Brillengläser in einer Umgebung ohne UV-Licht nach kurzer Zeit wieder vollständig auf, z. B. in Innenräumen innerhalb von 5 bis 10 Minuten.

Aufgabe der Erfindung ist es, eine Komponente für eine Brille, nämlich ein Brillenglas oder eine Brillenfassung, bereitzustellen, die ohne elektronische Baugruppen, d.h. ohne elektrische bzw. elektronische Steuer- und/oder Regel- und/oder Verstärkerschaltungen ein zuverlässiges Erfassen der aus dem UV-Licht der Sonne aufgenommenen Strahlendosis ermöglicht, und ein Verfahren zum Herstellen solcher Brillen zu schaffen.

Diese Aufgabe wird mit der in Anspruch 1 angegebene Komponente und das in den Ansprüchen 13 und 14 angegebene Verfahren gelöst. Vorteilhafte Ausführungsformen der Erfindung sind in den abhängigen Ansprüchen angegeben.

Der Erfindung liegt der Gedanke zugrunde, dass eine Brille, insbesondere eine Sonnenbrille bei Sonnenlicht in der Regel immer getragen wird und diese beim Tragen nicht durch Kleidung verdeckt ist. Darüber hinaus ist es ein Gedanke der Erfindung, dass eine von einer Person getragene Brille für dritte Personen gut sichtbar ist und deshalb eine Strahlendosisanzeige eines in die Brille integrierten Dosimeters auch von diesen gut wahrgenommen werden kann. Dritte Personen können den Brillenträger dann davor warnen, den Aufenthalt im Sonnenlicht fortzusetzen.

Eine erfindungsgemäße Komponente für die Brille hat einen Detektor für das Erfassen einer von einem Brillenträger aus dem UV-Licht aufgenommenen Strahlendosis und eine Strahlendosisanzeige für das Anzeigen der von dem Brillenträger aus dem UV-Licht aufgenommenen Strahlendosis. Der Detektor enthält ein Detektormaterial, das bei Beaufschlagen mit UV-Licht eine Verfärbung erfährt, die von der Strahlungsenergie abhängig ist, die das Detektormaterial bei Beaufschlagen mit UV-Licht aus dem UV-Licht aufnimmt, wobei die Strahlendosisanzeige eine Anzeigefläche hat, an der die Farbe des Detektormaterials sichtbar ist, und wobei die Anzeigefläche einen Flächenrand hat, der die Anzeigefläche auf einen Teilbereich der dem Brillenträger abgewandten optisch wirksamen Fläche des Brillenglases oder auf einen Teilbereich der Oberfläche der das Brillenglas aufnehmenden Fassung begrenzt.

Unter einer optisch wirksamen Fläche Im Sinne der Erfindung wird eine das Licht brechenden Fläche eines Brillenglases verstanden.

Der Detektor kann in das Brillenglas integriert sein. Auch die Strahlendosisanzeige ist möglichst in das Brillenglas integriert. Das Brillenglas hat dabei einen Brillenglasabschnitt, in dem das Detektormaterial angeordnet ist. Der Detektor kann allerdings auch in die Brillenfassung integriert sein.

Eine Idee der Erfindung ist es insbesondere, dass das Detektormaterial in einen Brillenglaskörper des Brillenglases eingebettet ist und/oder dass das Detektormaterial in einer Schicht, insbesondere in einer Antireflexschicht oder in einer Hartlackschicht auf einem Brillenglaskörper des Brillenglases aufgenommen ist und/oder dass das Detektormaterial in einer auf einem Brillenglaskörper angeordneten Folie aufgenommen ist und/oder dass das Detektormaterial in einer in einem Brillenglaskörper aufgenommenen Folie enthalten ist und/oder dass das Detektormaterial auf einen Brillenglaskörper aufgedruckt oder aufgestempelt ist. Auf diese Weise wird eine kompakte Integration von Detektor und Strahlendosisanzeige in ein Brillenglas ermöglicht.

Das Detektormaterial enthält bevorzugt einen photochromen Farbstoff, der bei Beaufschlagen mit UV-Licht eine reversible Veränderung seiner Farbe erfährt.

Der Farbstoff in dem Detektormaterial kann insbesondere ein in der EP 2 358 840 B1 beschriebener photochromer Spiropyran- oder Spirooxazin-Farbstoff sein, z.B. ein Farbstoff mit einer der nachfolgend wiedergegebenen Strukturformeln:

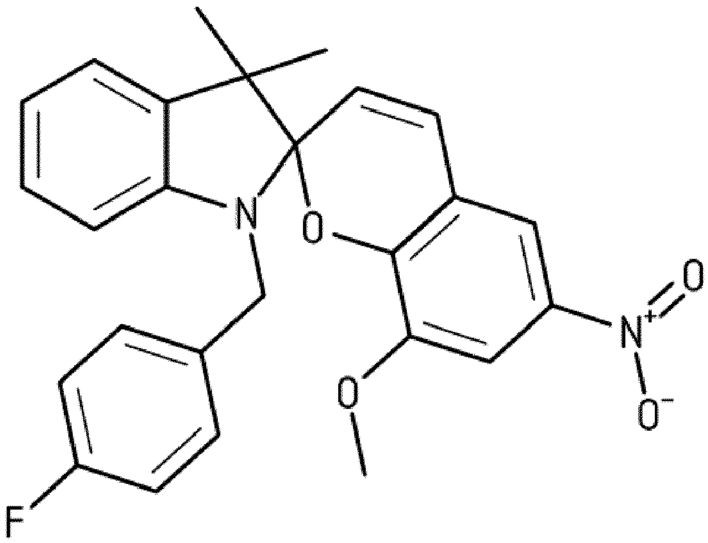

oder

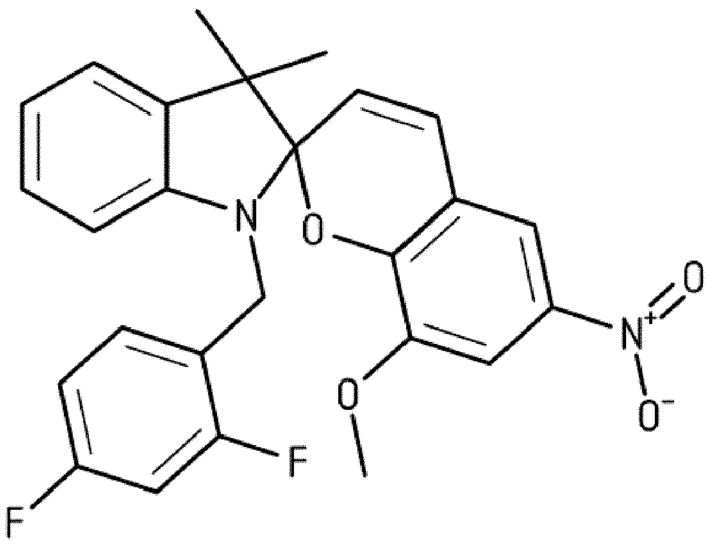

Zu bemerken ist, dass der Farbstoff in dem Detektormaterial auch eine Substanz mit einer zu den vorstehenden Strukturformeln modifizierten Strukturformel sein kann, in der es andere Ringbildner und entsprechende Substituenten gibt. Insbesondere kann der Farbstoff eine Substanz mit der folgenden Strukturformel sein:

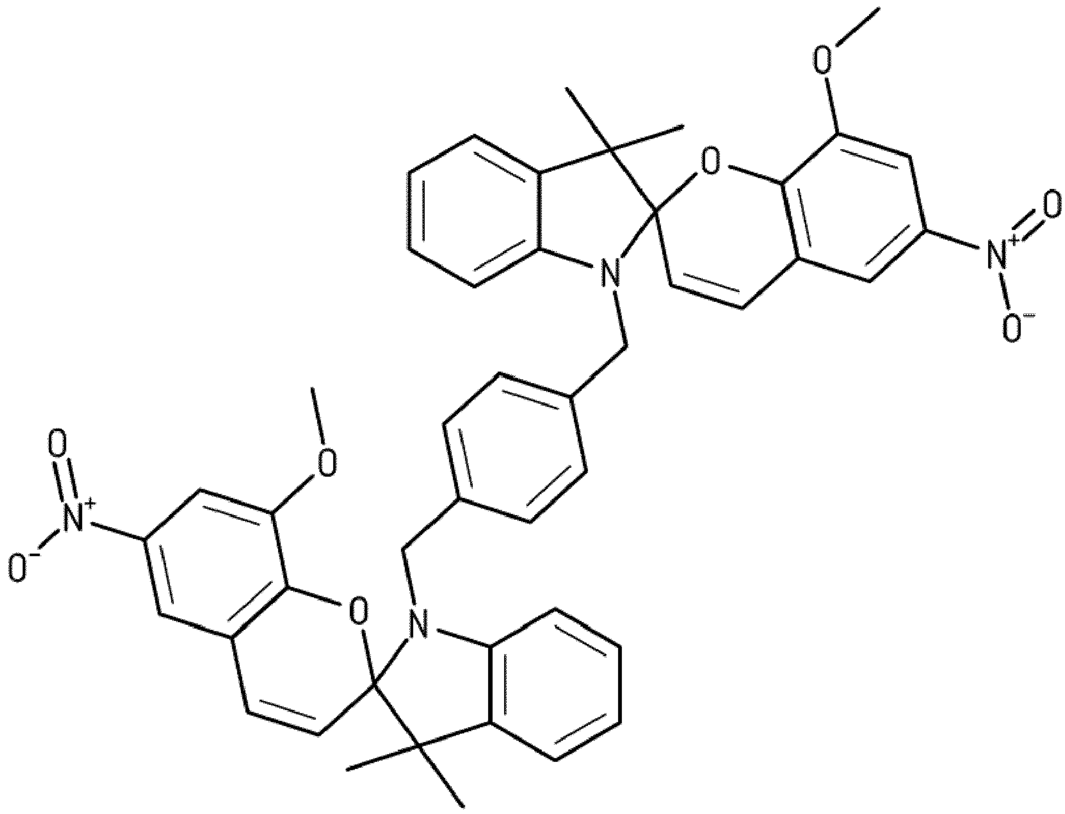

Das Dektektormaterial selbst kann z.B. ein mit dem Farbstoff versetztes Glasmaterial in einem Teil des Brillenglaskörpers der Brille sein. Das Glasmaterial ist in diesem Fall ein Matrixmaterial für den Farbstoff. Das Glasmaterial kann z.B. durch Gießen und Aushärten aus einer Gießmasse für Brillengläser gebildet sein, wie dies in der US 2012/0268828 A1 für die Beispiele 1 bis 11 in den Abschnitten [0122] bis [0164] beschrieben ist. Auf die Offenbarung der US 8,576,471 B2 wird hiermit Bezug genommen und diese vollumfänglich in die Beschreibung der vorliegenden Erfindung mit einbezogen. Die vorstehend erwähnte Gießmasse kann als Bestandteil z.B. ein Acrylat- oder Methacrylat-Monomer, ein Terpinolen-basiertes Radikal-Ketten-Transfer-Agens sowie einen Radikal-Initiator enthalten, der keine Wärme entwickelt. Die vorstehend erwähnte Gießmasse ist vorzugsweise flüssig.

Zu bemerken ist, dass gemäß US 2012/0268828 A1, Absätze [0035] bis [0038] das Glasmaterial aus einer Zusammensetzung umfassend

i) ein relativ hartes Polymer erhältlich aus einem Polyalkylenoxid(meth)acrylatmonomer,
ii) ein relativ flexibles Polymer, ebenfalls erhältlich aus einem Polyalkylenoxid(meth)acrylatmonomer, und
iii) ein Urethan(meth)acrylatmonomer erhalten werden kann.

Glasmaterial, das aus dieser Zusammensetzung erhalten wird, weist eine ausreichende Flexibilität auf, um eine akzeptable photochrome Einfärbung des Glasmaterials zu gewährleisten, und hat gleichzeitig eine für die Verwendung als Brillenglas ausreichende Härte und Stoßfestigkeit.

Zu bemerken ist auch, dass gemäß US 2012/0268828 A1, Absätze [0040] bis [0043] anstelle des vorstehend unter ii) aufgeführten Polyalkylenoxid(meth)acrylats auch ein ethoxyliertes Di(meth)acrylat von Bisphenol A eingesetzt werden kann.

Das Detektormaterial kann auch eine lichtaktive farbwechselnde Tinte oder ein lichtaktiver farbwechselnder Kunststoff sein, der auf das Brillenglas oder die Brillenfassung aufgetragen ist. Eine solche Tinte und ein solcher Kunststoff sind z.B. in der EP 2 358 840 B1 beschrieben, auf die hiermit Bezug genommen und deren Offenbarung in die Beschreibung dieser Erfindung vollumfänglich mit einbezogen wird.

Die lichtaktive, farbwechselnde Tinte oder die lichtaktive, farbwechselnde Beschichtung kann dabei z.B. umfassen:

A) ein organisches Polymer; und
B) etwa 2 bis etwa 75 Gewichts-%, basierend auf dem Gesamtgewicht von Bestandteil A und B, eine mehrfarbige lichtaktive farbwechselnde Zusammensetzung, umfassend

a) 1 bis 5 Gewichtsteile mindestens eines photochromen Materials wie beispielsweise eines organischen photochromen Farbstoffs, insbesondere eines photochromen Spiropyran- oder Spirooxazin-Farbstoffs, wie er vorstehend angegeben ist,
b) 1 bis 20 Gewichtsteile mindestens einer phenolischen photolatenten Säure und
c) 1 bis 10 Gewichtsteile mindestens eines säureempfindlichen chromogenen Farbbildners der Formel

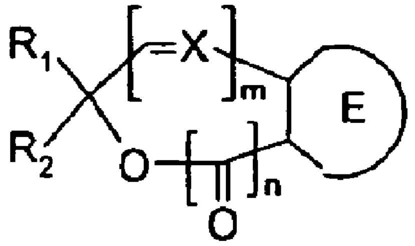

(I),

wobei es sich bei $R_1$ und $R_2$ unabhängig voneinander um $C_6$-$C_{14}$-Aryl oder $C_5$-$C_{14}$-Heteroaryl handelt, von denen beide gegebenenfalls durch mindestens $C_1$-$C_{12}$-Alkyl, $C_1$-$C_{12}$-Alkoxy, $C_1$-$C_{12}$-Dialkylamino, $C_1$-$C_{12}$-Alkylamino, $C_6$-$C_{14}$-Aryl, $C_6$-$C_{14}$-Arylamino, Di($C_6$-$C_{14}$-aryl)amino oder Halogen substituiert sind; oder $R_1$ und $R_2$ zusammen einen Ring oder ein Ringsystem bilden, das gegebenenfalls mindestens ein aus der aus O, S oder/und N bestehenden Gruppe ausgewähltes Heteroatom umfasst; wobei es sich bei m und n jeweils um eine Ganzzahl 0 oder 1 handelt, vorausgesetzt, dass es sich bei n um 1 und bei m um 0 handelt; es sich bei X um CH oder N handelt; und wobei E einen $C_6$-$C_{14}$-Aryl- oder $C_5$-$C_{14}$-Heteroarylring oder ein $C_6$-$C_{14}$-Aryl- oder $C_5$-$C_{14}$-Heteroaryl-Ringsystem bezeichnet, wobei der $C_6$-$C_{14}$-Aryl- oder $C_5$-$C_{14}$-Heteroarylring oder das $C_6$-$C_{14}$-Aryl- oder $C_5$-$C_{14}$-Heteroaryl-Ringsystem gegebenenfalls durch mindestens $C_1$-$C_{12}$-Alkyl, $C_1$-$C_{12}$-Alkoxy, $C_1$-$C_{12}$-Alkylamino, $C_1$-$C_{12}$-Dialkylamino, $NO_2$, CN oder Halogen substituiert ist.

D.h. das Verhältnis des photochromen Farbstoffs zu dem den photochromen Farbstoff aufnehmenden Material liegt hier in einem Bereich zwischen etwa 2 und etwa 75 Gewichts-%, basierend auf dem Gesamtgewicht des photochromen Farbstoffs und des den photochromen Farbstoff aufnehmenden Materials.

Die mehrfarbige lichtaktive farbwechselnde Tinte oder die mehrfarbige lichtaktive farbwechselnde Beschichtung kann insbesondere als Verbindung mit der Formel (I) eine Verbindung mit der Formel

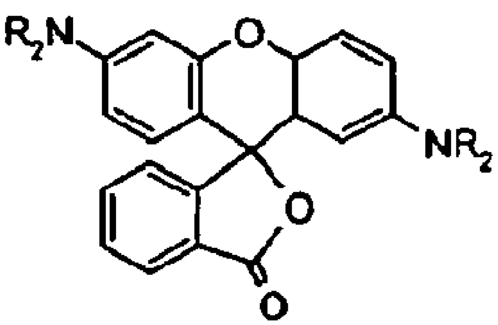

oder

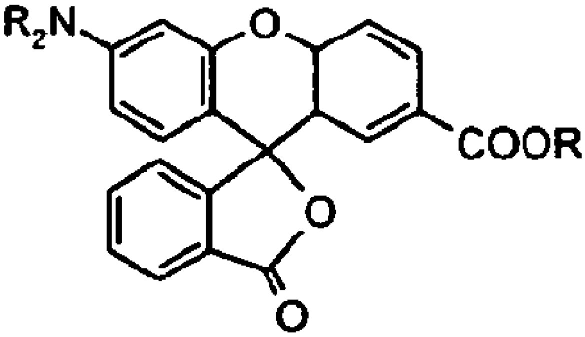

oder

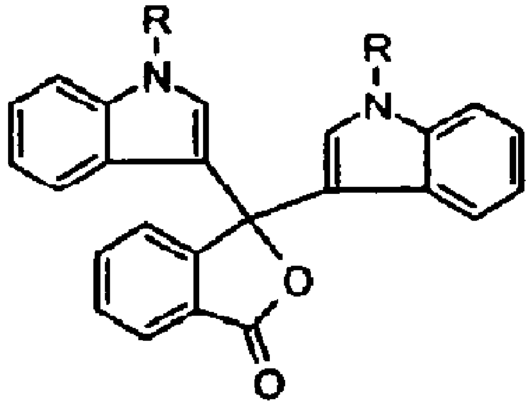

oder

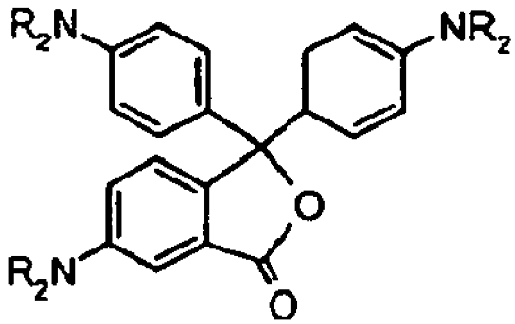

aufweisen, wobei es sich bei jedem R unabhängig um Wasserstoff oder $C_1$-$C_{12}$-Alkyl handelt.

Von Vorteil ist es, wenn das Detektormaterial, bei Beaufschlagen mit UV-Licht der Intensität I in dem Temperaturbereich -10 ºC $\leq$ T $\leq$ 30 ºC in abhängigkeit von der Zeit t eine reversible Veränderung der Transmission D(t) in Form einer das Detektormaterial eindunkelnden Verfärbung mit einer Eindunkelungsrate $\tau^{-1}$ erfährt, für die eine der Bedingungen gilt aus der Gruppe: $0 \leq \tau^{-1} \leq 1/30$ min$^{-1}$ oder $0 \leq \tau^{-1} \leq 1/60$ min$^{-1}$ oder $0 \leq \tau^{-1} \leq 1/90$ min$^{-1}$ oder $0 \leq \tau^{-1} \leq 1/120$ min$^{-1}$ oder $0 \leq \tau^{-1} \leq 1/150$ min$^{-1}$ oder $0 \leq \tau^{-1} \leq 1/180$ min$^{-1}$.

Die Erfindung schlägt insbesondere vor, dass das Brillenglas einen ersten Brillenglasabschnitt und einen zu dem ersten Brillenglasabschnitt komplementären zweiten Brillenglasabschnitt hat, der mit dem ersten Brillenglasabschnitt das Brillenglas bildet, wobei in dem ersten Brillenglasabschnitt das Detektormaterial angeordnet ist und wobei das Detektormaterial einen photochromen Farbstoff enthält, der bei Beaufschlagen mit UV-Licht eine reversible Veränderung seiner Farbe erfährt. Der zweite Brillenglasabschnitt enthält dabei entweder kein Material mit einem photochromen Farbstoff, der bei Beaufschlagen mit UV-Licht eine reversible Veränderung seiner Farbe erfährt, oder ein Material mit einem photochromen Farbstoff, der bei Beaufschlagen des Brillenglases mit UV-Licht eine reversible Veränderung seiner Farbe erfährt, wobei die reversible Veränderung der Farbe ein Eindunkeln des zweiten Brillenglasabschnitts mit einer Eindunkelungsrate bewirkt, die größer ist als die Eindunkelungsrate aufgrund der Veränderung der Farbe des Farbstoffs bei Beaufschlagen des ersten Brillenglasabschnitts mit UV-Licht in dem ersten Brillenglasabschnitt.

Z.B. kann das Detektormaterial in dem ersten Brillenglasabschnitt als photochromen Farbstoff mit einer geringen Eindunkelungsrate das Material Reversacol™ Graphite der Firma Vivimed Labs Ltd. enthalten, wobei dieser Farbstoff einer quervernetzbaren Gießzusammensetzung als Matrix beigemischt ist und mit dieser die nachfolgende Zusammensetzung bildet:

| Bestandteil | Anteile |
|---|---|
| 9G (Polyethylen Glykol (400) Dimethacrylat) | 22,5 |
| ATM 20 (Bisphenol A-ethoxyliertes Dimethaxcrylat) | 25 |
| U4HA (Urethantetraacrylat) | 1,25 |

(fortgesetzt)

| Bestandteil | Anteile |
|---|---|
| Methyl Phenyl Diglyoxylat | 0,1 |
| Reversacol™ Graphite | 1,0 |

Ausweislich des Katalogs der der Firma Vivimed Labs Ltd. nimmt der Farbstoff Reversacol™ Graphite bei Aktivierung mit UV-Licht nach ca. 191s zu 80% seine Aktivierungsfarbe an und bleicht mit einer Halbwertszeit von ca. 387s wieder aus.

In dem zweiten Brillenglasabschnitt kann das Detektormaterial z.B. die Substanz Reversacol™ Palatinate der Firma Vivimed Labs Ltd. als photochromen Farbstoff mit einer hohen Eindunkelungsrate enthalten, wobei dieser Farbstoff, z.B. einem insbesondere in der US 8,044,141 B2 beschriebenen Matrixmaterial nach Art der Substanz Acrypol™ beigemischt ist, um die folgende Zusammensetzung zu bilden:

| Bestandteil | Anteile |
|---|---|
| Tris[2-(meth)acryloyloxy]ethyl]isocyanurat, | 50 |
| Polyethylen Glykol (400) Methacrylat | 50 |
| Benzophenon | 2,5 |
| Reversacol™ Palatinate | 1,0 |

Auf die Offenbarung der US 8,044,141 B2 wird hiermit insoweit Bezug genommen und diese vollumfänglich in die Beschreibung der vorliegenden Erfindung mit einbezogen.

Ausweislich des Katalogs der der Firma Vivimed Labs Ltd. nimmt der Farbstoff Reversacol™ Palatinate bei Aktivierung mit UV-Licht nach ca. 34s zu 80% seine Aktivierungsfarbe an und bleicht mit einer Halbwertszeit von ca. 20s wieder aus.

Zu bemerken ist, dass diese Zusammensetzung insbesondere als eine Beschichtung auf Polycarbonat-Glasmaterial aufgetragen werden kann.

Die Strahlendosisanzeige kann eine Anzeigefläche mit mehreren Anzeigesegmenten, insbesondere Balkensegmenten umfassen. Die Anzeigesegmente sind Abschnitte der Anzeigefläche, an denen die Farbe des Detektormaterials sichtbar ist. Die Anzeigesegmente sind z.B. dadurch gebildet, dass das Detektormaterial an die Anzeigefläche angrenzende Detektormaterial-Bereiche mit unterschiedlichen Farbstoffkonzentrationen des photochromen Farbstoffs oder an die Anzeigefläche angrenzende Bereiche mit unterschiedlichen photochromen Farbstoffen enthält.

Der erste Brillenglasabschnitt kann hier auch für das Bilden einer als Segmentanzeige ausgebildeten Strahlendosisanzeige das Detektormaterial mit dem photochromen Farbstoff in unterschiedlichen Farbstoffkonzentrationen enthalten.

Unter einer als Segmentanzeige ausgebildeten Strahlendosisanzeige wird vorliegend eine Strahlendosisanzeige mit einer Anzeigefläche verstanden, in der es für das Anzeigen der von dem Brillenträger aus dem UV-Licht aufgenommenen Strahlendosis voneinander getrennte Abschnitte gibt, an denen jeweils die Farbe des Detektormaterials sichtbar ist, wenn die entsprechende Komponente für die Brille mit UV-Licht beaufschlagt wird.

Alternativ dazu, dass der erste Brillenglasabschnitt das Detektormaterial mit dem photochromen Farbstoff in unterschiedlichen Farbstoffkonzentrationen enthält ist es auch möglich, dass der erste Brillenglasabschnitt Detektormaterial mit unterschiedlichen photochromen Farbstoffen für das Bilden einer solchen Segmentanzeige aufweist. Auf diese Weise lässt sich erreichen, dass die aus UV-Licht aufgenommene Energiedosis bzw. Äquivalentdosis in einem großen Messbereich angezeigt werden kann. Eine Idee der Erfindung ist es auch, dass der photochrome Farbstoff in dem ersten Brillenglasabschnitt ein Logo oder einen Schriftzug bildet. Auf diese Weise wird eine Strahlendosisanzeige geschaffen, die eine Signalwirkung hat.

Die Erfindung erstreckt sich auch auf ein Verfahren zum Herstellen eines Brillenglases mit einem Detektor für das Erfassen von UV-Licht und einer Strahlendosisanzeige. Dabei wird ein photochromes Brillenglas unter Verwendung eines Brillenglaskörpers und eines auf oder in dem Brillenglaskörper angeordneten Farbstoffs hergestellt, der sich bei Beaufschlagen mit Licht in einem im UV-Spektralbereich liegenden ersten Wellenlängenbereich verfärbt, und der sich bei Beaufschlagen mit Licht, dessen Wellenlänge in einem von dem ersten Wellenlängenbereich verschiedenen und mit dem ersten Wellenlängenbereich nicht überlappenden zweiten Wellenlängenbereich liegt, nicht oder andersartig verfärbt. Der Brillenglaskörper wird dann mit einer Schicht aus einem Hartlack und/oder einem Antireflexmaterial überzogen, die für das in dem ersten Wellenlängenbereich liegende Licht zumindest teilweise undurchlässig ist. Anschließend

wird die Schicht z. B. durch Beaufschlagen mit Laserlicht oder durch chemisches Behandeln mit Stoffen oder durch mechanisches Abtragen auf dem Brillenglaskörper lokal entfernt oder modifiziert, um die Strahlendosisanzeige damit bereitzustellen.

Darüber hinaus kann ein erfindungsgemäßes Brillenglas auch wie folgt hergestellt werden: Es wird ein photochromes Brillenglas unter Verwendung eines Brillenglaskörpers und eines auf oder in dem Brillenglaskörper angeordneten Farbstoffs bereitgestellt, der sich bei Beaufschlagen mit Licht in einem im UV-Spektralbereich liegenden ersten Wellenlängenbereich verfärbt und der sich bei Beaufschlagen mit Licht, dessen Wellenlänge in einem zu dem ersten Wellenlängenbereich komplementären zweiten Wellenlängenbereich liegt, nicht oder anders verfärbt. Anschließend wird der Farbstoff auf oder in dem Brillenglaskörper lokal entfernt oder ausgedünnt.

Im Folgenden wird die Erfindung anhand der in der Zeichnung in schematischer Weise dargestellten Ausführungsbeispiele näher erläutert.

Es zeigen:

Fig. 1 eine Sonnenbrille mit einer Fassung, mit einem linken und einem rechten Brillenglas und mit einem Dosimeter;

Fig. 2 einen Teilschnitt eines Brillenglases der Sonnenbrille mit dem Dosimeter;

Fig. 3 die Empfindlichkeit einer Schicht auf dem Brillenglaskörper, die einen photochromen Farbstoff enthält, die Transmission einer Antireflexschicht auf dem Brillenglas sowie die lokale Brillenglastransmission;

Fig. 4 einen Teilschnitt eines weiteren Brillenglases mit einem Dosimeter;

Fig. 5 eine Segmentanzeige des Dosimeters für das Anzeigen einer Strahlendosis;

Fig. 6 eine weitere Segmentanzeige eines Dosimeters für das Anzeigen einer Strahlendosis;

Fig. 7 eine Strahlendosisanzeige in Form eines Warnschilds;

Fig. 8 eine Strahlendosisanzeige in Form eines Schriftzugs; und

Fig. 9 eine weitere Brille mit einer Fassung, mit einem linken und einem rechten Brillenglas und mit einem Dosimeter.

Die in der Fig. 1 gezeigte Brille 10 ist eine Sonnenbrille. Die Brille 10 hat ein linkes Brillenglas 12 und ein rechtes Brillenglas 14, die jeweils in einer Fassung 16 festgelegt sind. In das Brillenglas 12 ist ein Dosimeter 18 für UV-Licht integriert. Das Dosimeter 18 ist eine Einrichtung zur Messung der Energiedosis oder Äquivalentdosis von elektromagnetischer Strahlung, deren Wellenlänge $\lambda$ im ultravioletten Spektralbereich liegt, d. h. 100 nm $\leq \lambda \leq$ 400 nm.

Die Fig. 2 ist ein Teilschnitt eines Brillenglases 12 entlang der Linie II - II aus Fig. 1 und zeigt den Aufbau des Dosimeters 18. Das Dosimeter 18 enthält einen Detektor 20 und hat eine Strahlendosisanzeige 22 mit einer Anzeigefläche 24. Der Detektor 20 befindet sich für das Erfassen von UV-Licht in einem von dem UV-Licht durchsetzten Brillenglasabschnitt 26 des Brillenglases 12. Der Detektor 20 wird von einem Detektormaterial 28 gebildet, das in dem Brillenglasabschnitt 26 angeordnet ist und das abhängig von Zeitdauer t und Intensität I des die Zone 26 beaufschlagenden UV-Lichts eine an der Anzeigefläche 24 der Strahlendosisanzeige 22 sichtbare Verfärbung erfährt. Der Detektor 20 ermöglicht damit das Erfassen von aus dem UV-Licht aufgenommener Strahlungsenergie und damit das Messen der Strahlendosis bzw. der Äquivalentdosis, der ein Brillenträger, der die Brille 10 trägt, durch das UV-Licht ausgesetzt ist.

Die Anzeigefläche 24 hat einen Flächenrand 29. Der Flächenrand 29 begrenzt die Anzeigefläche 24 auf einen Teilbereich der beim Tragen der Brille 10 einer Beobachtungsperson abgewandten optisch wirksamen Fläche 15 des Brillenglases 12.

Die Anzeigefläche 24 der Strahlendosisanzeige 22 ist eine Brillenglasoberfläche. Das Brillenglas 12 hat einen Brillenglaskörper 30, der eine Antireflexbeschichtung 32 aufweist und der mit einer Schicht 34 aus einem Material überzogen ist, das innerhalb des Brillenglasabschnitts 26 als Detektormaterial 28 ein Matrixmaterial 33 mit einem in das Matrixmaterial 33 eingebetteten photochromen Farbstoff 31 enthält. Aufgrund des photochromen Farbstoffs 31 in der Schicht 34 erfährt der Brillenglasabschnitt bei Beaufschlagen mit UV-Licht der Intensität I in Abhängigkeit von der Zeit t eine reversible Veränderung der Transmission D(t) in Form einer als Eindunkelung wirkenden Verfärbung bis auf einen Minimalwert $D_{min}$. Dabei gilt:

$$D(t) \approx D_{min} (e^{-t/\tau} - 1)^{-1}$$

Die Kinetik der als Eindunkelung wirkenden Verfärbung wird also vorliegend bestimmt durch die Eindunkelungsrate $\tau^{-1}$ und den Minimalwert $D_{min}$. Diese hat in dem Brillenglasabschnitt einen Wert $\tau^{-1} \leq 1/30\ min^{-1}$ oder auch $\tau^{-1} \leq 1/180\ min^{-1}$. Eine Eindunkelungsrate $\tau^{-1} = 1/30\ min^{-1}$ bedeutet, dass die Transmission D(t) des Brillenglasabschnitts auf die Hälfte absinkt, wenn dieser 30 min lang mit UV-Licht beaufschlagt wird.

Die Fig. 3 zeigt mit der Kurve 38 den Verlauf der lokalen Empfindlichkeit E(x) der Schicht 34 auf dem Brillenglaskörper 30 innerhalb des Brillenglasabschnitts 26 und außerhalb des Brillenglasabschnitts26 in der Richtung 36 aus Fig. 2 in dem Spektralbereich des UV-Lichts, d. h. für Licht der Wellenlänge 100 nm $\leq \lambda \leq$ 380 nm. Die Empfindlichkeit E(x) ist ein Maß für das lokale Eindunkelungsvermögen des Brillenglases 12 in dem Brillenglasabschnitt 26 aufgrund des photochromen Farbstoffs 31 in der Schicht 34. Die lokale Empfindlichkeit E(x) ist proportional zu der Konzentration des photochromen Farbstoffs 31 in der Schicht 34. Mit der Kurve 40 zeigt die Fig. 3 die lokale Transmission D(x) der Antireflexbeschichtung 32 in dem Wellenlängenbereich 100 nm $\leq \lambda \leq$ 800 nm. Innerhalb des Brillenglasabschnitts 26 ist die Transmission D(x) der Antireflexbeschichtung 32 in dem Maße reduziert, in dem die spektrale Empfindlichkeit E(x) der Schicht 34 größer ist als außerhalb des Brillenglasabschnitts 26.

Die Kurve 44 in der Fig. 3 zeigt die resultierende Transmission D(x) der Antireflexbeschichtung 32 und der Schicht 34, wenn das Detektormaterial 28 in dem Brillenglasabschnitt 26 durch Beaufschlagen der Brille 10 mit UV-Licht maximal eingedunkelt ist. Die Konzentration des photochromen Farbstoffs 31 in dem Detektormaterial 28 und die Transmission D(x) der Antireflexbeschichtung sind aufeinander derart abgestimmt, dass die resultierende Transmission $D_{res}(x)$ der Antireflexbeschichtung 32 und der Schicht 34 bei maximaler Eindunkelung des Detektormaterials 28 in dem Brillenglasabschnitt 26 über das Brillenglas 12 hinweg, d. h. innerhalb und außerhalb des Brillenglasabschnitts 26 konstant ist.

Der Brillenglasabschnitt 26 ist ein erster Brillenglasabschnitt des Brillenglases 12. In dem außerhalb des Brillenglasabschnitts 26 liegenden weiteren Brillenglasabschnitt 27 des Brillenglases 12, der in Bezug auf das Brillenglas zu dem Brillenglasabschnitt 26 komplementär ist, d.h. der mit dem Brillenglasabschnitt 26 das Brillenglas 12 bildet, gibt es kein Material mit einem photochromen Farbstoff 31, der bei Beaufschlagen mit UV-Licht eine reversible Veränderung seiner Farbe erfährt.

Zu bemerken ist, dass bei einer weiteren, modifizierten Ausführungsform der Erfindung allerdings vorgesehen sein kann, dass das Detektormaterial 28 mit dem photochromen Farbstoff 31 nicht in einer Schicht 34 auf dem Brillenglaskörper 30 angeordnet ist, sondern innerhalb des Brillenglasabschnitts 26 in dem Brillenglaskörper 30 selbst. Das Detektormaterial 28 ist dann in den Brillenglaskörper 30 eingebettet oder in dem Brillenglaskörper 30 angeordnet. Darüber hinaus ist zu bemerken, dass bei einer weiteren, modifizierten Ausführungsform der Erfindung vorgesehen sein kann, dass das Detektormaterial 28 mit dem photochromen Farbstoff sowohl in einer Schicht 34 auf dem Brillenglaskörper 30 als auch innerhalb des Brillenglasabschnitts 26 in dem Brillenglaskörper 30 angeordnet sein kann. Zu bemerken ist außerdem, dass alternativ oder zusätzlich zu der Antireflexbeschichtung 32 auf dem Brillenglaskörper 30 auch eine Hartlackschicht aufgetragen sein kann.

Die Fig. 4 zeigt eine Brille 10’ mit einem Brillenglas 12’, das ein Dosimeter 18 aufweist, dessen Aufbau dem Aufbau des vorstehend beschriebenen, in das Brillenglas 12 integrierten Dosimeters 18 grundsätzlich entspricht. Soweit Aufbau und Bestandteile des Brillenglases 12’ dem Aufbau und den Bestandteilen des vorstehend beschriebenen Brillenglases entsprechen, sind diese durch die gleichen Zahlen als Bezugszeichen kenntlich gemacht. Die Strahlendosisanzeige 22’ ist hier als eine Segmentanzeige gestaltet. Die Fig. 5 ist eine vergrößerte Anzeige der Strahlendosisanzeige 22’. In dem Brillenglasabschnitt 26 des Brillenglases 12 mit dem Detektormaterial 28 ist der photochrome Farbstoff des Detektormaterials 28 in der Schicht 34 in unterschiedlichen Konzentrationen auf Detektormaterial-Bereiche verteilt, die Anzeigesegmenten 46 entsprechen und die unterhalb der Anzeigefläche 24 des Detektors 20 in der entsprechenden Brille 10 liegen. Die lokale Empfindlichkeit E(x) der Schicht 34 in den einzelnen Segmenten 46 ist hier jedoch unterschiedlich. Damit wird erreicht, dass mit der Strahlendosisanzeige 22’ das Aufnehmen unterschiedlicher Strahlendosiswerte visualisiert werden kann.

Die Fig. 6 zeigt eine weitere Strahlendosisanzeige 22" mit einer Anzeigefläche, die einen Flächenrand 29 hat. Die Strahlendosisanzeige 22" wird durch Festlegen einer in mehreren segmentförmig ausgebildeten unter der Anzeigefläche liegenden Detektormaterial-Bereichen angeordneten, lokal unterschiedlichen Konzentration des photochromen Farbstoffs 31 in der Schicht 34 in dem Brillenglasabschnitt 26 bereitgestellt. Die Detektormaterial-Bereiche entsprechen hier Balkensegmenten 48 der Strahlendosisanzeige 22". Die Fig. 7 zeigt eine Strahlendosisanzeige in Form eines Warnschilds 50, die durch Festlegen einer in der Geometrie des Warnschilds 50 gehaltenen Konzentration des photochromen Farbstoffs in der Schicht 34 in der Zone 26 bereitgestellt wird. Die Anzeigefläche der Strahlendosisanzeige hat wiederum einen Flächenrand 29, der die Anzeigefläche auf einen Teilbereich der dem Brillenträger abgewandten optisch wirksamen Fläche 15 des Brillenglases 12’ begrenzt.

In der Fig. 8 ist eine Strahlendosisanzeige nach der Art eines Schriftzugs 52 mit einer Anzeigefläche und mit einem Flächenrand 29 gezeigt. Die Strahlendosisanzeige nach der Art eines Schriftzugs 52 wird durch Festlegen einer in der Geometrie des Warnschilds 50 gehaltenen Konzentration des photochromen Farbstoffs in der Schicht 34 in dem Brillenglasabschnitt 26 bereitgestellt.

Zu bemerken ist, dass die vorstehend angegebenen Strahlendosisanzeigen insbesondere auch durch Aufdrucken oder Aufstempeln eines Detektormaterials mit dem photochromen Farbstoff, z. B. Aufstempeln in einem Tamponprint-Verfahren und/oder Aufdrucken in einem Inkjet-Verfahren, auf einen in der Fig. 2 gezeigten, gegebenenfalls beschichteten Brillenglaskörper 30 oder auch durch Anordnen, insbesondere Aufkleben einer Folie mit einer solchen Strahlendosisanzeige auf dem Brillenglaskörper 30 bereitgestellt werden kann. Das Aufkleben einer solchen Folie mit einer Strahlendosisanzeige auf den Brillenglaskörper 30 kann auch im Rahmen des Nachrüstens einer bereits fertiggestellten, von einer Person benutzten Brille erfolgen.

Die Fig. 9 zeigt eine Brille 10" mit einem linken Brillenglas 12 und einem rechten Brillenglas 14, die in einer Fassung 16 festgelegt sind, wobei hier in einen Brillenbügelabschnitt 54 der Fassung 16 ein Dosimeter 18 für UV-Licht integriert ist. Der Aufbau des Dosimeters 18 entspricht dabei dem Aufbau des vorstehend beschriebenen, in ein Brillenglas integrierten Dosimeters 18.

Eine erfindungsgemäße Brille 10 mit einem Brillenglas 12, 12', mit einer das Brillenglas 12, 12' aufnehmenden Fassung 16 und mit einem Dosimeter 18 für UV-Licht, das einen Detektor 20 für das Erfassen von UV-Licht und eine Strahlendosisanzeige 22 hat, kann wie folgt hergestellt werden:

> Es wird ein photochromes Brillenglas unter Verwendung eines Brillenglaskörpers 30 und eines auf oder in dem Brillenglaskörper 30 angeordneten Farbstoffs hergestellt, der sich bei Beaufschlagen mit Licht in einem im UV-Spektralbereich liegenden ersten Wellenlängenbereich verfärbt und der sich bei Beaufschlagen mit Licht, dessen Wellenlänge in einem zu dem ersten Wellenlängenbereich komplementären zweiten Wellenlängenbereich liegt, nicht oder andersartig verfärbt. Der Brillenglaskörper 30 wird dann mit einer Schicht 34 aus einem Hartlack und/oder einem Antireflexmaterial überzogen, die für das in dem ersten Wellenlängenbereich liegende Licht zumindest teilweise undurchlässig ist. Anschließend wird die Schicht 34 z. B. durch Beaufschlagen mit Laserlicht oder durch chemisches Behandeln mit Stoffen oder durch mechanisches Abtragen auf dem Brillenglaskörper 30 lokal entfernt oder modifiziert, um die Strahlendosisanzeige 22 damit bereitzustellen.

Darüber hinaus kann ein erfindungsgemäßes Brillenglas auch wie folgt hergestellt werden: Es wird ein photochromes Brillenglas 12 unter Verwendung eines Brillenglaskörpers 30 und eines auf oder in dem Brillenglaskörper 30 angeordneten Farbstoffs bereitgestellt, der sich bei Beaufschlagen mit Licht in einem im UV-Spektralbereich liegenden ersten Wellenlängenbereich verfärbt und der sich bei Beaufschlagen mit Licht, dessen Wellenlänge in einem zu dem ersten Wellenlängenbereich komplementären zweiten Wellenlängenbereich liegt, nicht oder anders verfärbt, und es wird anschließend der Farbstoff auf oder in dem Brillenglaskörper 30 lokal entfernt oder ausgedünnt oder es wird das Molekülgitter eines den Farbstoff auf oder in dem Brillenglaskörper 30 aufnehmenden Matrixmaterials versteift.

Eine erfindungsgemäße Brille kann auch hergestellt werden, indem ein Material mit einem photochromen Farbstoff als Lack auf einen Brillenglaskörper 30 aus einem nicht-photochromen Brillenglas aufgestempelt wird, z. B. in einem Tamponprint-Verfahren, oder indem ein solches Material als Lack auf den Brillenglaskörper 30 aufgedruckt wird, z. B. in einem Inkjet-Verfahren, oder indem ein solches Material auf den Brillenglaskörper 30 als eine Folie z. B. in einem Thermotransfer-Verfahren aufgebracht wird. Das als Lack aufgebrachte Material wird dann in einem Temper-Prozess ausgehärtet. Dieser Temper-Prozess kann entweder gemeinsam oder getrennt von einem Temper-Prozess für das Aushärten einer auf dem nicht-photochromen Brillenglas angeordneten Hartlackschicht oder Antireflexschicht erfolgen. Indem das als Lack auf den Brillenglaskörper 30 aufgebrachte Material mit einer Hartlackschicht oder einer Antireflexschicht überzogen wird, kann das in das entsprechende Brillenglas 12 integrierte Dosimeter 18 vor schädlichen Umwelteinflüssen geschützt werden.

Zusammenfassend sind insbesondere folgende bevorzugte Merkmale der Erfindung festzuhalten: Die Erfindung betrifft eine Komponente für eine Brille 10, 10', 10". Die Komponente ist ein Brillenglas 12 oder eine Brillenfassung 16 und weist einen Detektor 20 für das Erfassen einer von einem Brillenträger aus dem UV-Licht aufgenommenen Strahlendosis und eine Strahlendosisanzeige 22, 22', 22" für das Anzeigen der von dem Brillenträger aus dem UV-Licht aufgenommenen Strahlendosis auf. Der Detektor 20 enthält ein Detektormaterial 28, das bei Beaufschlagen mit UV-Licht eine Verfärbung erfährt, die von der Strahlungsenergie abhängig ist, die das Detektormaterial 28 bei Beaufschlagen mit UV-Licht aus dem UV-Licht dabei aufnimmt. Die Strahlendosisanzeige 22, 22', 22" hat eine Anzeigefläche, an der die Farbe des Detektormaterials sichtbar ist. Die Anzeigefläche hat einen Flächenrand 29, der die Anzeigefläche auf einen Teilbereich der dem Brillenträger abgewandten optisch wirksamen Fläche des Brillenglases 12 oder auf einen Teilbereich der Oberfläche der das Brillenglas 12 aufnehmenden Fassung 16 begrenzt.

## Bezugszeichenliste

| | |
|---|---|
| 10, 10,' 10" | Brille |
| 12, 12" | linkes Brillenglas |

| | |
|---|---|
| 14 | rechtes Brillenglas |
| 15 | optisch wirksame Fläche |
| 16 | Fassung |
| 18 | Dosimeter |
| 20 | Detektor |
| 22, 22', 22" | Strahlendosisanzeige |
| 24 | Anzeigefläche |
| 26 | Brillenglasabschnitt |
| 27 | komplementärer Brillenglasabschnitt |
| 28 | Detektormaterial |
| 29 | Flächenrand |
| 30 | Brillenglaskörper |
| 31 | Farbstoff |
| 32 | Antireflexbeschichtung |
| 33 | Matrixmaterial |
| 34 | Schicht |
| 36 | Richtung |
| 38 | Kurve |
| 40 | Kurve |
| 44 | Kurve |
| 46 | Anzeigesegment |
| 48 | Balkensegment |
| 50 | Warnschild |
| 52 | Schriftzug |
| 54 | Brillenbügelabschnitt |

**Patentansprüche**

1. Komponente für eine Brille (10, 10', 10"), wobei die Komponente ein Brillenglas (12, 12') oder eine Brillenfassung (16) ist, mit einem Detektor (20) für das Erfassen einer von einem Brillenträger aus dem UV-Licht aufgenommenen Strahlendosis und mit einer Strahlendosisanzeige (22, 22', 22") für das Anzeigen der von dem Brillenträger aus dem UV-Licht aufgenommenen Strahlendosis,
**dadurch gekennzeichnet, dass**
der Detektor (20) ein Detektormaterial (28) enthält, das bei Beaufschlagen mit UV-Licht eine Verfärbung erfährt, die von der Strahlungsenergie abhängig ist, die das Detektormaterial (28) bei Beaufschlagen mit UV-Licht aus dem UV-Licht dabei aufnimmt, wobei die Strahlendosisanzeige (22, 22', 22") eine Anzeigefläche (24) hat, an der die Farbe des Detektormaterials (28) sichtbar ist, und wobei die Anzeigefläche (24) einen Flächenrand (29) hat, der die Anzeigefläche (24) auf einen Teilbereich der dem Brillenträger abgewandten optisch wirksamen Fläche (15) des Brillenglases (12, 12') oder auf einen Teilbereich der Oberfläche der das Brillenglas (12, 12') aufnehmenden Fassung (16) begrenzt.

2. Komponente nach Anspruch 1, **dadurch gekennzeichnet, dass** der Detektor (20) in das Brillenglas (12, 12') integriert ist.

3. Komponente nach Anspruch 1 oder 2, **dadurch gekennzeichnet, dass** das Detektormaterial (28) in einem Brillenglaskörper (30) des Brillenglases (12, 12') angeordnet oder in einen Brillenglaskörper (30) des Brillenglases (12, 12') eingebettet ist und/oder dass das Detektormaterial (28) in einer Schicht (34), insbesondere einer Antireflexschicht oder einer Hartlackschicht auf einem Brillenglaskörper (30) des Brillenglases (12, 12') aufgenommen ist und/oder dass das Detektormaterial (28) in einer auf einem Brillenglaskörper (30) angeordneten Folie aufgenommen ist und/oder dass das Detektormaterial in einer in einem Brillenglaskörper (30) aufgenommenen Folie enthalten ist und/oder dass das Detektormaterial (28) auf einen Brillenglaskörper (30) aufgedruckt oder aufgestempelt ist.

4. Komponente nach einem der vorangegangenen Ansprüche, **dadurch gekennzeichnet, dass** das Detektormaterial (28) einen photochromen Farbstoff (31) enthält, der bei Beaufschlagen mit UV-Licht eine reversible Veränderung seiner Farbe erfährt.

5. Komponente nach Anspruch 4, **dadurch gekennzeichnet, dass** der photochrome Farbstoff (31) ein Material aus

der Gruppe photochromer Spiropyran-Farbstoff, Spirooxazin-Farbstoff, und/oder ein Farbstoff mit der Strukturformel

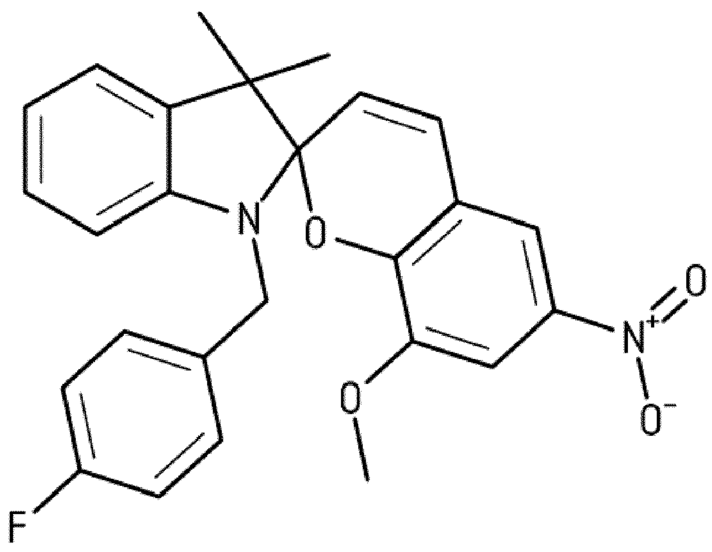

oder mit der Strukturformel

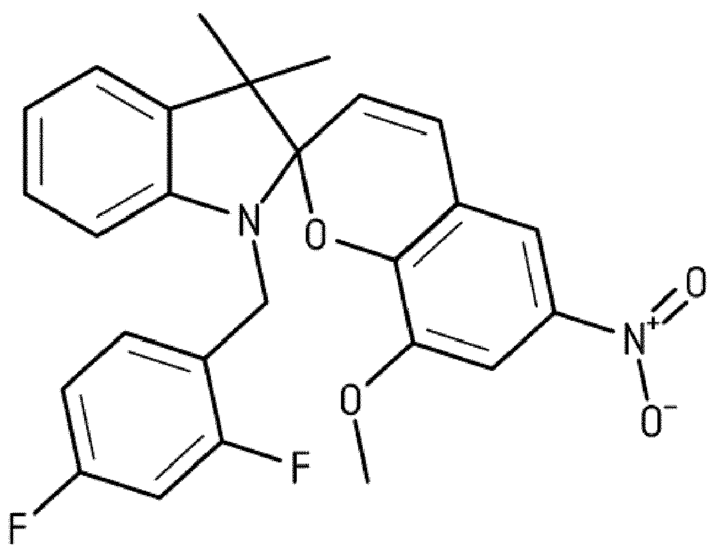

oder mit einer zu den vorstehenden Strukturformeln modifizierten Strukturformel sein kann, in der es andere Ringbildner und entsprechende Substituenten gibt; oder mit der Strukturformel

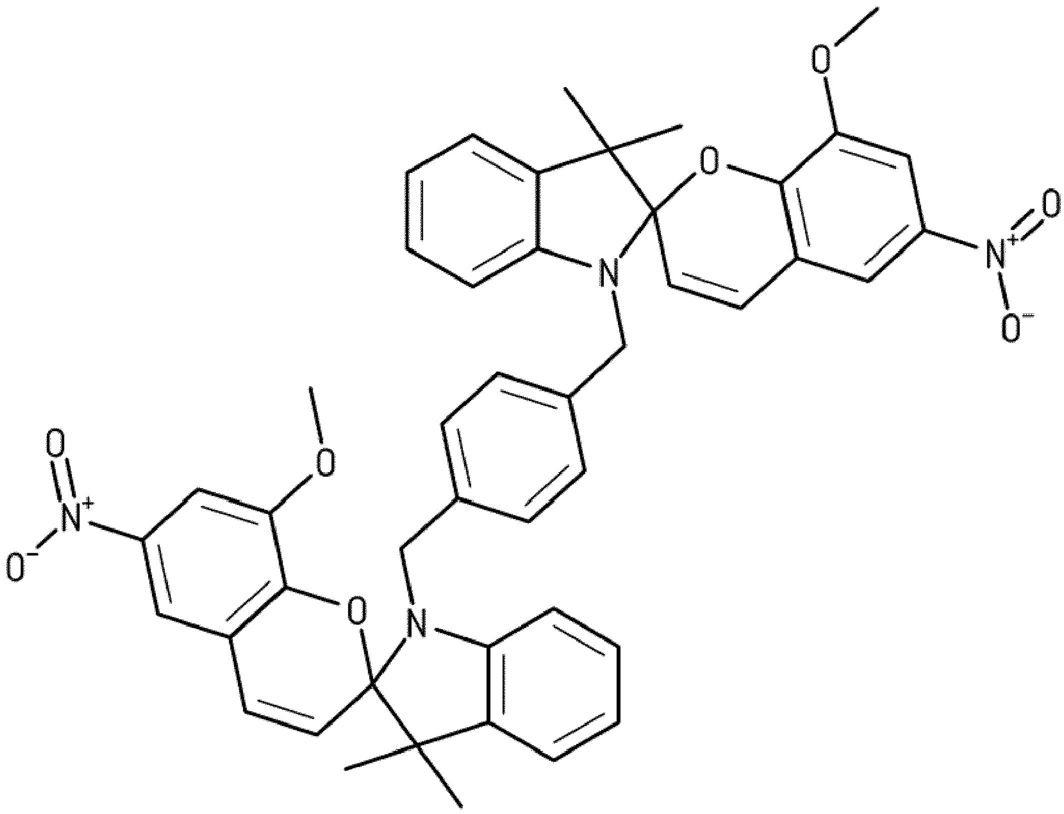

ist.

6. Komponente nach Anspruch 5, **dadurch gekennzeichnet, dass** das Detektormaterial (28) ein den photochromen Farbstoff 28) aufnehmendes Matrixmaterial (33) aus einem organischen Polymer enthält.

7. Komponente nach Anspruch 6, **dadurch gekennzeichnet, dass** das Verhältnis des photochromen Farbstoffs (28) zu dem den photochromen Farbstoff aufnehmenden Matrixmaterial (33) in einem Bereich zwischen etwa 2 und etwa 75 Gewichts-%, basierend auf dem Gesamtgewicht des photochromen Farbstoffs (28) und des den photochromen Farbstoff aufnehmenden Matrixmaterials (33) liegt.

8. Komponente nach einem der vorangegangenen Ansprüche, **dadurch gekennzeichnet, dass** das Detektormaterial (28) bei Beaufschlagen mit UV-Licht der Intensität I in Abhängigkeit von der Zeit t eine reversible Veränderung der Transmission D(t) in Form einer das Detektormaterial (28) eindunkelnden Verfärbung mit einer Eindunkelungsrate $\tau^{-1}$ erfährt, für die in dem Temperaturbereich -10 °C $\leq \tau \leq$ 30 °C eine der Bedingungen gilt aus der Gruppe: $0 \leq \tau^{-1} \leq 1/30\ min^{-1}$ oder $0 \leq \tau^{-1} \leq 1/60\ min^{-1}$ oder $0 \leq \tau^{-1} \leq 1/90\ min^{-1}$ oder $0 \leq \tau^{-1} \leq 1/120\ min^{-1}$ oder $0 \leq \tau^{-1} \leq 1/150\ min^{-1}$ oder $0 \leq \tau^{-1} \leq 1/180\ min^{-1}$.

9. Komponente nach einem der vorangegangenen Ansprüche, **dadurch gekennzeichnet, dass** das Brillenglas (12, 12') einen ersten Brillenglasabschnitt (26) und einen zu dem ersten Brillenglasabschnitt komplementären zweiten Brillenglasabschnitt (27) hat, der mit dem ersten Brillenglasabschnitt (26) das Brillenglas (12, 12') bildet, wobei in dem ersten Brillenglasabschnitt (26) das Detektormaterial (28) angeordnet ist und wobei das Detektormaterial (28) einen photochromen Farbstoff (28) enthält, der bei Beaufschlagen mit UV-Licht eine reversible Veränderung seiner Farbe erfährt, und der zweite Brillenglasabschnitt (27) kein Material mit einem photochromen Farbstoff (28) enthält, der bei Beaufschlagen mit UV-Licht eine reversible Veränderung seiner Farbe erfährt, oder der ein Material mit einem photochromen Farbstoff (28) enthält, der bei Beaufschlagen des Brillenglases mit UV-Licht eine reversible Veränderung seiner Farbe erfährt, wobei die reversible Veränderung der Farbe ein Eindunkeln des zweiten Brillenglasabschnitts (27) mit einer Eindunkelungsrate bewirkt, die größer ist als die Eindunkelungsrate aufgrund der Veränderung der Farbe des Farbstoffs (28) bei Beaufschlagen des ersten Brillenglasabschnitts mit UV-Licht in dem ersten Brillenglasabschnitt.

10. Komponente nach einem der vorangegangenen Ansprüche, **dadurch gekennzeichnet, dass** die Strahlendosisanzeige (22’) Anzeigesegmente (46), insbesondere Balkensegmente (48) umfasst.

**11.** Komponente nach Anspruch 10, **dadurch gekennzeichnet, dass** die Anzeigesegmente (46) dadurch gebildet sind, dass das Detektormaterial (28) unter der Anzeigefläche (24) angeordnete oder an die Anzeigefläche (24) angrenzende Detektormaterial-Bereiche mit unterschiedlichen Farbstoffkonzentrationen des photochromen Farbstoffs (31) enthält oder dass das Detektormaterial (28) unter der Anzeigefläche (24) angeordnete oder an die Anzeigefläche (24) angrenzende Detektormaterial-Bereiche mit unterschiedlichen photochromen Farbstoffen (31) enthält.

**12.** Brille mit einer gemäß einem der Ansprüche 1 bis 11 ausgebildeten Komponente.

**13.** Verfahren zum Herstellen eines Brillenglases (12, 12’) mit einem Detektor (20) für das Erfassen einer von einem Brillenträger aus dem UV-Licht aufgenommenen Strahlendosis und mit einer Strahlendosisanzeige (22, 22’, 22") für das Anzeigen der von dem Brillenträger aus dem UV-Licht aufgenommenen Strahlendosis,
**gekennzeichnet durch** folgende Schritte:

Herstellen eines photochromen Brillenglases (12, 12’) unter Verwendung eines Brillenglaskörpers (30) und eines auf oder in dem Brillenglaskörper (30) angeordneten Farbstoffs (31), der sich bei Beaufschlagen mit Licht in einem im UV-Spektralbereich liegenden ersten Wellenlängenbereich verfärbt, und der sich bei Beaufschlagen mit Licht, dessen Wellenlänge in einem von dem ersten Wellenlängenbereich verschiedenen und mit dem ersten Wellenlängenbereich nicht überlappenden zweiten Wellenlängenbereich liegt, nicht oder anders verfärbt;
Beschichten des Brillenglaskörpers (30) mit einer Schicht (34) aus einem Hartlack und/oder einem Antireflexmaterial, die für das in dem ersten Wellenlängenbereich liegende Licht zumindest teilweise undurchlässig ist;
Lokales Entfernen und/oder lokales Modifizieren dieser Schicht (34) auf dem Brillenglaskörper (30) für das Bereitstellen einer Strahlendosisanzeige (22, 22’, 22").

**14.** Verfahren zum Herstellen eines Brillenglases (12, 12’) mit einem Detektor (20) für das Erfassen einer von einem Brillenträger aus dem UV-Licht aufgenommenen Strahlendosis und mit einer Strahlendosisanzeige (22) für das Anzeigen der von dem Brillenträger aus dem UV-Licht aufgenommenen Strahlendosis,
**gekennzeichnet durch** folgende Schritte:

Herstellen eines photochromen Brillenglases (12, 12’) unter Verwendung eines Brillenglaskörpers (30) und eines auf oder in dem Brillenglaskörper (30) angeordneten Detektormaterials (28) mit einem Farbstoff (31), der sich bei Beaufschlagen mit Licht in einem im UV-Spektralbereich liegenden ersten Wellenlängenbereich verfärbt, und der sich bei Beaufschlagen mit Licht, dessen Wellenlänge in einem zu dem ersten Wellenlängenbereich komplementären zweiten Wellenlängenbereich liegt, nicht oder anders verfärbt; und
lokales Entfernen oder Ausdünnen des Farbstoffs (31) auf oder in dem Brillenglaskörper (30) oder Versteifen eines Molekülgitters eines den Farbstoff (31) auf oder in dem Brillenglaskörper (30) aufnehmenden Matrixmaterials (33).

**Geänderte Patentansprüche gemäss Regel 137(2) EPÜ.**

**1.** Komponente für eine Brille (10, 10’, 10"), wobei die Komponente ein Brillenglas (12, 12’) ist, das einen Brillenglaskörper (30) hat, mit einem Detektor (20) für das Erfassen einer von einem Brillenträger aus dem UV-Licht aufgenommenen Strahlendosis und mit einer Strahlendosisanzeige (22, 22’, 22") für das Anzeigen der von dem Brillenträger aus dem UV-Licht aufgenommenen Strahlendosis,
wobei der Detektor (20) ein Detektormaterial (28) enthält, das bei Beaufschlagen mit UV-Licht eine Verfärbung erfährt, die von der Strahlungsenergie abhängig ist, die das Detektormaterial (28) bei Beaufschlagen mit UV-Licht aus dem UV-Licht dabei aufnimmt, wobei die Strahlendosisanzeige (22, 22’, 22") eine Anzeigefläche (24) hat, an der die Farbe des Detektormaterials (28) sichtbar ist, und wobei die Anzeigefläche (24) einen Flächenrand (29) hat, der die Anzeigefläche (24) auf einen Teilbereich der dem Brillenträger abgewandten optisch wirksamen Fläche (15) des Brillenglases (12, 12’) begrenzt, und
wobei das Detektormaterial (28) in einem Abschnitt des Brillenglases (12, 12’) aufgenommen ist,
**dadurch gekennzeichnet, dass**
der Abschnitt des Brillenglases (12, 12’) ein Brillenglas-Abschnitt aus der Gruppe ist: - Schicht (34) auf dem Brillenglaskörper (30), - Antireflexschicht auf dem Brillenglaskörper (30), - Hartlackschicht auf dem Brillenglaskörper (30), - auf dem Brillenglaskörper (30) angeordnete Folie,

- in dem Brillenglaskörper (30) aufgenommene Folie, oder

dass das Detektormaterial (28) auf einen Brillenglaskörper (30) aufgedruckt ist, oder
dass das Detektormaterial (28) auf einen Brillenglaskörper (30) aufgestempelt ist.

**2.** Komponente nach Anspruch 1, **dadurch gekennzeichnet, dass** das Detektormaterial (28) einen photochromen Farbstoff (31) enthält, der bei Beaufschlagen mit UV-Licht eine reversible Veränderung seiner Farbe erfährt.

**3.** Komponente nach Anspruch 2, **dadurch gekennzeichnet, dass** der photochrome Farbstoff (31) ein Material aus der Gruppe photochromer Spiropyran-Farbstoff, Spirooxazin-Farbstoff, und/oder ein Farbstoff mit der Strukturformel

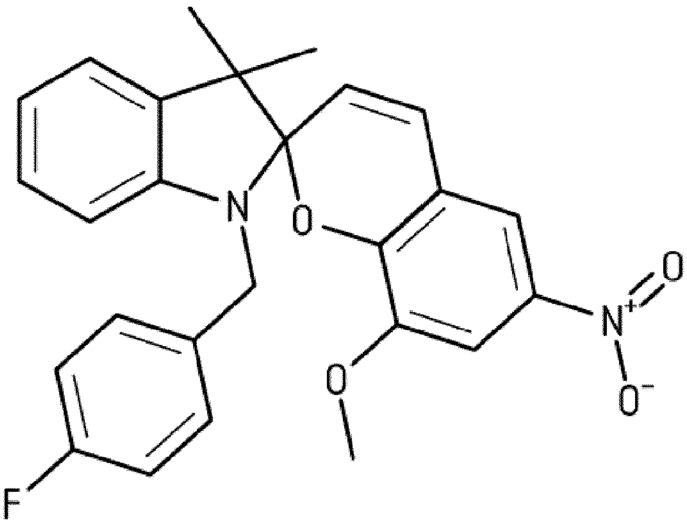

oder mit der Strukturformel

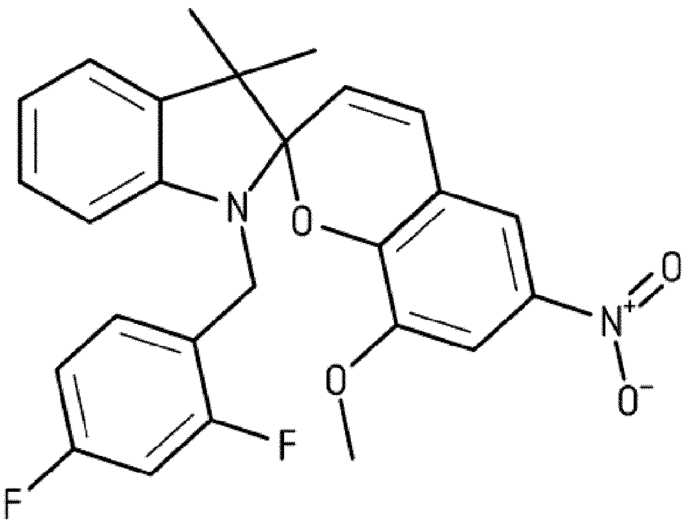

oder mit einer zu den vorstehenden Strukturformeln modifizierten Strukturformel ist, in der es andere Ringbildner und entsprechende Substituenten gibt;
oder ein Farbstoff mit der Strukturformel

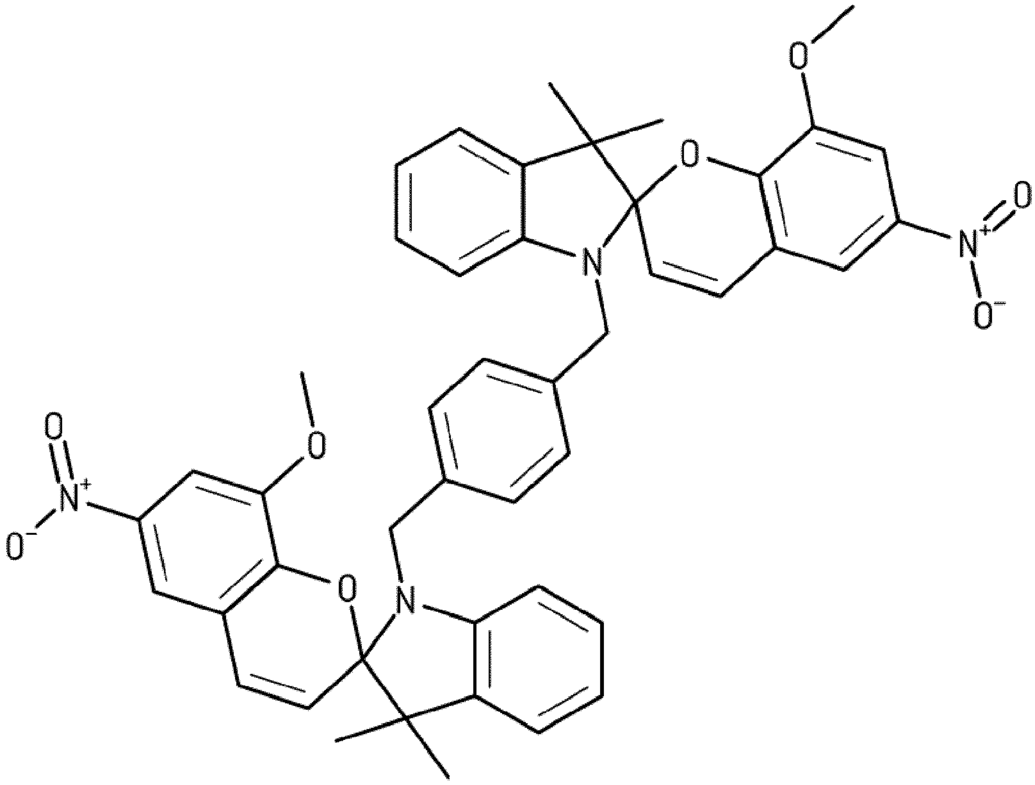

ist.

**4.** Komponente nach Anspruch 3, **dadurch gekennzeichnet, dass** das Detektormaterial (28) ein den photochromen Farbstoff (28) aufnehmendes Matrixmaterial (33) aus einem organischen Polymer enthält.

**5.** Komponente nach Anspruch 4, **dadurch gekennzeichnet, dass** das Verhältnis des photochromen Farbstoffs (28) zu dem den photochromen Farbstoff aufnehmenden Matrixmaterial (33) in einem Bereich zwischen etwa 2 und etwa 75 Gewichts-%, basierend auf dem Gesamtgewicht des photochromen Farbstoffs (28) und des den photochromen Farbstoff aufnehmenden Matrixmaterials (33) liegt.

**6.** Komponente nach einem der vorangegangenen Ansprüche, **dadurch gekennzeichnet, dass** der Abschnitt des Brillenglases (12, 12'), in dem das Detektormaterial (28) aufgenommen ist, ein erster Brillenglasabschnitt (26) ist, wobei das Brillenglas 812, 12') einen zu dem ersten Brillenglasabschnitt komplementären zweiten Brillenglasabschnitt (27) hat, der mit dem ersten Brillenglasabschnitt (26) das Brillenglas (12, 12') bildet, wobei in dem ersten Brillenglasabschnitt (26) das Detektormaterial (28) angeordnet ist und wobei das Detektormaterial (28) einen photochromen Farbstoff (28) enthält, der bei Beaufschlagen mit UV-Licht eine reversible Veränderung seiner Farbe erfährt, und der zweite Brillenglasabschnitt (27) kein Material mit einem photochromen Farbstoff (28) enthält, der bei Beaufschlagen mit UV-Licht eine reversible Veränderung seiner Farbe erfährt, oder der ein Material mit einem photochromen Farbstoff (28) enthält, der bei Beaufschlagen des Brillenglases mit UV-Licht eine reversible Veränderung seiner Farbe erfährt, wobei die reversible Veränderung der Farbe ein Eindunkeln des zweiten Brillenglasabschnitts (27) mit einer Eindunkelungsrate bewirkt, die größer ist als die Eindunkelungsrate aufgrund der Veränderung der Farbe des Farbstoffs (28) bei Beaufschlagen des ersten Brillenglasabschnitts mit UV-Licht in dem ersten Brillenglasabschnitt.

**7.** Komponente nach einem der vorangegangenen Ansprüche, **dadurch gekennzeichnet, dass** die Strahlendosisanzeige (22') Anzeigesegmente (46), insbesondere Balkensegmente (48) umfasst.

**8.** Komponente nach Anspruch 7, **dadurch gekennzeichnet, dass** die Anzeigesegmente (46) dadurch gebildet sind, dass das Detektormaterial (28) unter der Anzeigefläche (24) angeordnete oder an die Anzeigefläche (24) angrenzende Detektormaterial-Bereiche mit unterschiedlichen Farbstoffkonzentrationen des photochromen Farbstoffs (31) enthält oder dass das Detektormaterial (28) unter der Anzeigefläche (24) angeordnete oder an die Anzeigefläche (24) angrenzende Detektormaterial-Bereiche mit unterschiedlichen photochromen Farbstoffen (31) enthält.

**9.** Brille mit einer gemäß einem der Ansprüche 1 bis 8 ausgebildeten Komponente.

**10.** Verfahren zum Herstellen eines Brillenglases (12, 12') mit einem Detektor (20) für das Erfassen einer von einem Brillenträger aus dem UV-Licht aufgenommenen Strahlendosis und mit einer Strahlendosisanzeige (22) für das Anzeigen der von dem Brillenträger aus dem UV-Licht aufgenommenen Strahlendosis,
**gekennzeichnet durch** folgende Schritte:

Herstellen eines photochromen Brillenglases (12, 12') unter Verwendung eines Brillenglaskörpers (30) und eines auf oder in dem Brillenglaskörper (30) angeordneten Detektormaterials (28) mit einem Farbstoff (31), der sich bei Beaufschlagen mit Licht in einem im UV-Spektralbereich liegenden ersten Wellenlängenbereich verfärbt, und der sich bei Beaufschlagen mit Licht, dessen Wellenlänge in einem zu dem ersten Wellenlängenbereich komplementären zweiten Wellenlängenbereich liegt, nicht oder anders verfärbt;
wobei der Brillenglaskörper (30) mit einer Schicht (34) aus einem Hartlack und/oder einem Antireflexmaterial überzogen wird, die für das in dem ersten Wellenlängenbereich liegende Licht zumindest teilweise undurchlässig ist, und wobei die Schicht (34) aus dem Hartlack und/oder dem Antireflexmaterial durch Beaufschlagen mit Laserlicht oder durch chemisches Behandeln mit Stoffen oder durch mechanisches Abtragen auf dem Brillenglaskörper (30) lokal entfernt oder modifiziert wird, um die Strahlendosisanzeige (22) damit bereitzustellen;
oder
Herstellen eines photochromen Brillenglases (12) unter Verwendung eines Brillenglaskörpers (30) und eines auf oder in dem Brillenglaskörper (30) angeordneten Farbstoffs, der sich bei Beaufschlagen mit Licht in einem im UV-Spektralbereich liegenden ersten Wellenlängenbereich verfärbt und der sich bei Beaufschlagen mit Licht, dessen Wellenlänge in einem zu dem ersten Wellenlängenbereich komplementären zweiten Wellenlängenbereich liegt, nicht oder anders verfärbt,
wobei der Farbstoff auf oder in dem Brillenglaskörper (30) anschließend lokal entfernt oder ausgedünnt wird oder das Molekülgitter eines den Farbstoff auf oder in dem Brillenglaskörper (30) aufnehmenden Matrixmaterials versteift wird;
oder
Herstellen des Detektors (20), indem ein Material mit einem photochromen Farbstoff auf einen Brillenglaskörper (30) aufgestempelt wird oder indem ein Material mit einem photochromen Farbstoff auf einen Brillenglaskörper (30) in einem Tamponprint-Verfahren aufgestempelt wird oder indem ein solches Material auf den Brillenglaskörper (30) aufgedruckt wird oder indem ein solches Material auf den Brillenglaskörper (30) in einem Inkjet-Verfahren aufgedruckt wird, oder indem ein solches Material auf den Brillenglaskörper (30) als eine Folie aufgebracht wird.

**1.** Komponente für eine Brille (10, 10', 10"), wobei die Komponente ein Brillenglas (12, 12') ist, das einen Brillenglaskörper (30) hat, mit einem Detektor (20) für das Erfassen einer von einem Brillenträger aus dem UV-Licht aufgenommenen Strahlendosis und mit einer Strahlendosisanzeige (22, 22', 22") für das Anzeigen der von dem Brillenträger aus dem UV-Licht aufgenommenen Strahlendosis,
wobei der Detektor (20) ein Detektormaterial (28) enthält, das bei Beaufschlagen mit UV-Licht eine Verfärbung erfährt, die von der Strahlungsenergie abhängig ist, die das Detektormaterial (28) bei Beaufschlagen mit UV-Licht aus dem UV-Licht dabei aufnimmt, wobei die Strahlendosisanzeige (22, 22', 22") eine Anzeigefläche (24) hat, an der die Farbe des Detektormaterials (28) sichtbar ist, und wobei die Anzeigefläche (24) einen Flächenrand (29) hat, der die Anzeigefläche (24) auf einen Teilbereich der dem Brillenträger abgewandten optisch wirksamen Fläche (15) des Brillenglases (12, 12') begrenzt, und
wobei das Detektormaterial (28) in einem Abschnitt des Brillenglases (12, 12') aufgenommen ist,
**dadurch gekennzeichnet, dass**
der Abschnitt des Brillenglases (12, 12') ein Brillenglas-Abschnitt aus der Gruppe ist: - Schicht (34) auf dem Brillenglaskörper (30), - Antireflexschicht auf dem Brillenglaskörper (30), - Hartlackschicht auf dem Brillenglaskörper (30), - auf dem Brillenglaskörper (30) angeordnete Folie,

- in dem Brillenglaskörper (30) aufgenommene Folie, oder

dass das Detektormaterial (28) auf einen Brillenglaskörper (30) aufgedruckt ist, oder
dass das Detektormaterial (28) auf einen Brillenglaskörper (30) aufgestempelt ist.

**2.** Komponente nach Anspruch 1, **dadurch gekennzeichnet, dass** das Detektormaterial (28) einen photochromen

Farbstoff (31) enthält, der bei Beaufschlagen mit UV-Licht eine reversible Veränderung seiner Farbe erfährt.

**3.** Komponente nach Anspruch 2, **dadurch gekennzeichnet, dass** der photochrome Farbstoff (31) ein Material aus der Gruppe photochromer Spiropyran-Farbstoff, Spirooxazin-Farbstoff, und/oder ein Farbstoff mit der Strukturformel

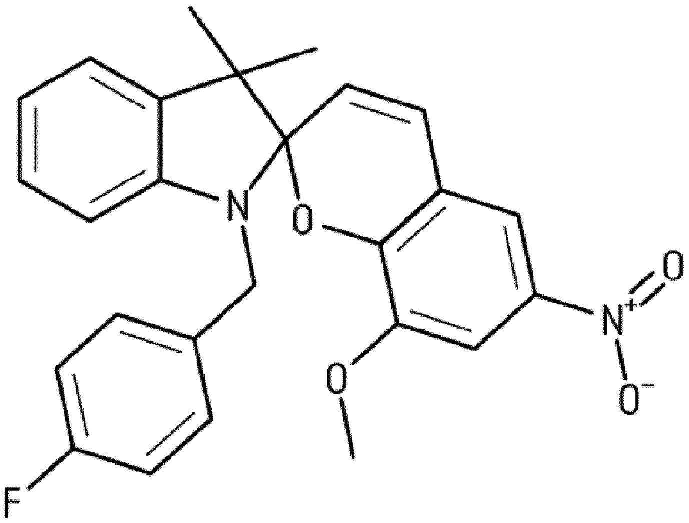

oder mit der Strukturformel

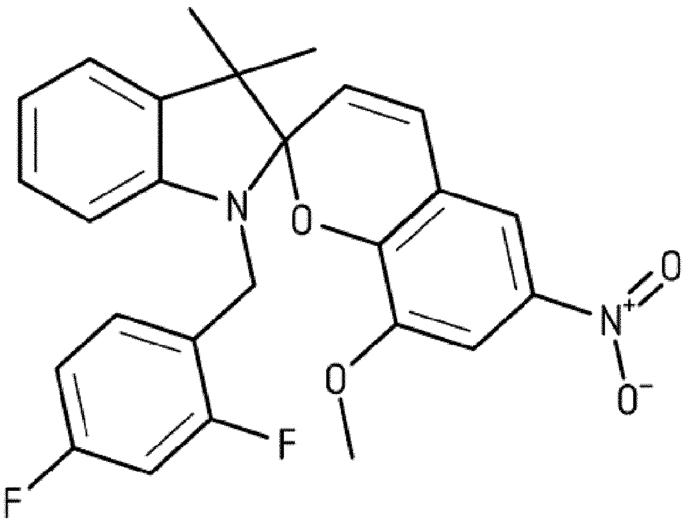

oder mit einer zu den vorstehenden Strukturformeln modifizierten Strukturformel ist, in der es andere Ringbildner und entsprechende Substituenten gibt;
oder ein Farbstoff mit der Strukturformel

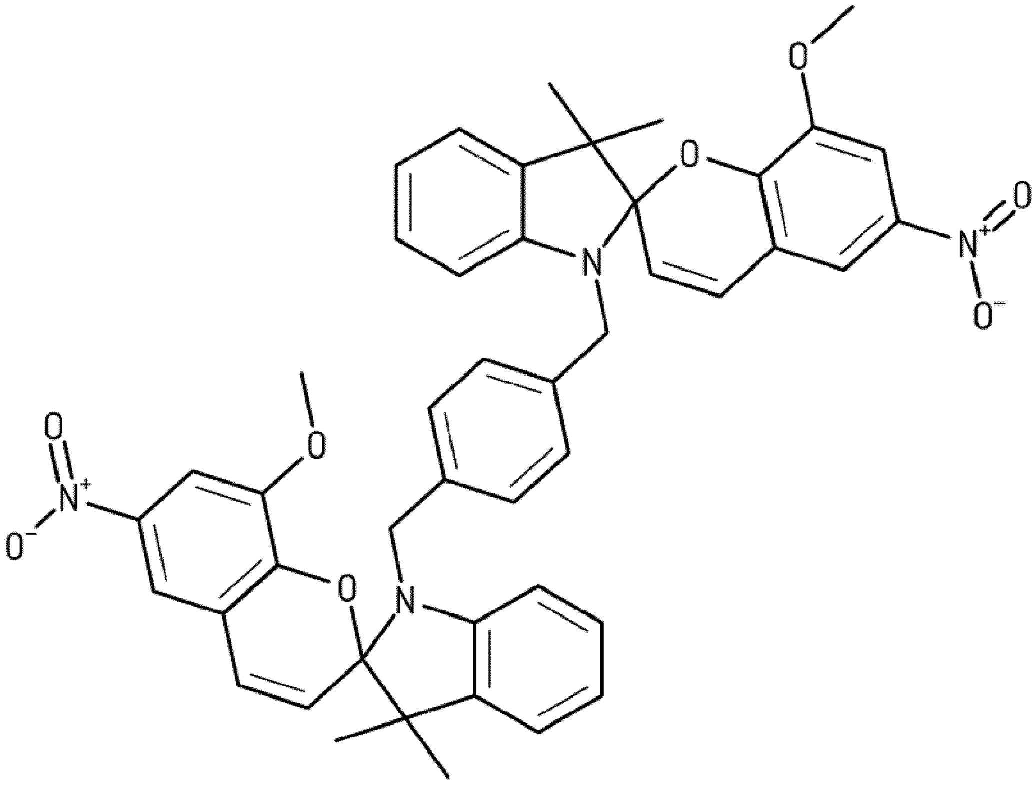

ist.

4. Komponente nach Anspruch 3, **dadurch gekennzeichnet, dass** das Detektormaterial (28) ein den photochromen Farbstoff (28) aufnehmendes Matrixmaterial (33) aus einem organischen Polymer enthält.

5. Komponente nach Anspruch 4, **dadurch gekennzeichnet, dass** das Verhältnis des photochromen Farbstoffs (28) zu dem den photochromen Farbstoff aufnehmenden Matrixmaterial (33) in einem Bereich zwischen etwa 2 und etwa 75 Gewichts-%, basierend auf dem Gesamtgewicht des photochromen Farbstoffs (28) und des den photochromen Farbstoff aufnehmenden Matrixmaterials (33) liegt.

6. Komponente nach einem der vorangegangenen Ansprüche, **dadurch gekennzeichnet, dass** der Abschnitt des Brillenglases (12, 12'), in dem das Detektormaterial (28) aufgenommen ist, ein erster Brillenglasabschnitt (26) ist, wobei das Brillenglas 812, 12') einen zu dem ersten Brillenglasabschnitt komplementären zweiten Brillenglasabschnitt (27) hat, der mit dem ersten Brillenglasabschnitt (26) das Brillenglas (12, 12') bildet, wobei in dem ersten Brillenglasabschnitt (26) das Detektormaterial (28) angeordnet ist und wobei das Detektormaterial (28) einen photochromen Farbstoff (28) enthält, der bei Beaufschlagen mit UV-Licht eine reversible Veränderung seiner Farbe erfährt, und der zweite Brillenglasabschnitt (27) kein Material mit einem photochromen Farbstoff (28) enthält, der bei Beaufschlagen mit UV-Licht eine reversible Veränderung seiner Farbe erfährt, oder der ein Material mit einem photochromen Farbstoff (28) enthält, der bei Beaufschlagen des Brillenglases mit UV-Licht eine reversible Veränderung seiner Farbe erfährt, wobei die reversible Veränderung der Farbe ein Eindunkeln des zweiten Brillenglasabschnitts (27) mit einer Eindunkelungsrate bewirkt, die größer ist als die Eindunkelungsrate aufgrund der Veränderung der Farbe des Farbstoffs (28) bei Beaufschlagen des ersten Brillenglasabschnitts mit UV-Licht in dem ersten Brillenglasabschnitt.

7. Komponente nach einem der vorangegangenen Ansprüche, **dadurch gekennzeichnet, dass** die Strahlendosisanzeige (22') Anzeigesegmente (46), insbesondere Balkensegmente (48) umfasst.

8. Komponente nach Anspruch 7, **dadurch gekennzeichnet, dass** die Anzeigesegmente (46) dadurch gebildet sind, dass das Detektormaterial (28) unter der Anzeigefläche (24) angeordnete oder an die Anzeigefläche (24) angrenzende Detektormaterial-Bereiche mit unterschiedlichen Farbstoffkonzentrationen des photochromen Farbstoffs (31) enthält oder dass das Detektormaterial (28) unter der Anzeigefläche (24) angeordnete oder an die Anzeigefläche (24) angrenzende Detektormaterial-Bereiche mit unterschiedlichen photochromen Farbstoffen (31) enthält.

**9.** Brille mit einer gemäß einem der Ansprüche 1 bis 8 ausgebildeten Komponente.

**10.** Verfahren zum Herstellen eines Brillenglases (12, 12') mit einem Detektor (20) für das Erfassen einer von einem Brillenträger aus dem UV-Licht aufgenommenen Strahlendosis und mit einer Strahlendosisanzeige (22) für das Anzeigen der von dem Brillenträger aus dem UV-Licht aufgenommenen Strahlendosis,
**gekennzeichnet durch** folgende Schritte:

Herstellen eines photochromen Brillenglases (12, 12') unter Verwendung eines Brillenglaskörpers (30) und eines auf oder in dem Brillenglaskörper (30) angeordneten Detektormaterials (28) mit einem Farbstoff (31), der sich bei Beaufschlagen mit Licht in einem im UV-Spektralbereich liegenden ersten Wellenlängenbereich verfärbt, und der sich bei Beaufschlagen mit Licht, dessen Wellenlänge in einem zu dem ersten Wellenlängenbereich komplementären zweiten Wellenlängenbereich liegt, nicht oder anders verfärbt;
wobei der Brillenglaskörper (30) mit einer Schicht (34) aus einem Hartlack und/oder einem Antireflexmaterial überzogen wird, die für das in dem ersten Wellenlängenbereich liegende Licht zumindest teilweise undurchlässig ist, und wobei die Schicht (34) aus dem Hartlack und/oder dem Antireflexmaterial durch Beaufschlagen mit Laserlicht oder durch chemisches Behandeln mit Stoffen oder durch mechanisches Abtragen auf dem Brillenglaskörper (30) lokal entfernt oder modifiziert wird, um die Strahlendosisanzeige (22) damit bereitzustellen.
oder
Herstellen des Detektors (20), indem ein Material mit einem photochromen Farbstoff auf einen Brillenglaskörper (30) aufgestempelt wird oder indem ein Material mit einem photochromen Farbstoff auf einen Brillenglaskörper (30) in einem Tamponprint-Verfahren aufgestempelt wird oder indem ein solches Material auf den Brillenglaskörper (30) aufgedruckt wird oder indem ein solches Material auf den Brillenglaskörper (30) in einem Inkjet-Verfahren aufgedruckt wird, oder indem ein solches Material auf den Brillenglaskörper (30) als eine Folie aufgebracht wird.

**1.** Verfahren zum Herstellen eines Brillenglases (12, 12') mit einem Detektor (20) für das Erfassen einer von einem Brillenträger aus dem UV-Licht aufgenommenen Strahlendosis und mit einer Strahlendosisanzeige (22) für das Anzeigen der von dem Brillenträger aus dem UV-Licht aufgenommenen Strahlendosis,
**gekennzeichnet durch** folgende Schritte:

Herstellen eines photochromen Brillenglases (12, 12') unter Verwendung eines Brillenglaskörpers (30) und eines auf oder in dem Brillenglaskörper (30) angeordneten Detektormaterials (28) mit einem Farbstoff (31), der sich bei Beaufschlagen mit Licht in einem im UV-Spektralbereich liegenden ersten Wellenlängenbereich verfärbt, und der sich bei Beaufschlagen mit Licht, dessen Wellenlänge in einem zu dem ersten Wellenlängenbereich komplementären zweiten Wellenlängenbereich liegt, nicht oder anders verfärbt;
wobei der Brillenglaskörper (30) mit einer Schicht (34) aus einem Hartlack und/oder einem Antireflexmaterial überzogen wird, die für das in dem ersten Wellenlängenbereich liegende Licht zumindest teilweise undurchlässig ist, und wobei die Schicht (34) aus dem Hartlack und/oder dem Antireflexmaterial durch Beaufschlagen mit Laserlicht oder durch chemisches Behandeln mit Stoffen oder durch mechanisches Abtragen auf dem Brillenglaskörper (30) lokal entfernt oder modifiziert wird, um die Strahlendosisanzeige (22) damit bereitzustellen;
oder
Herstellen eines photochromen Brillenglases (12) unter Verwendung eines Brillenglaskörpers (30) und eines auf oder in dem Brillenglaskörper (30) angeordneten Farbstoffs, der sich bei Beaufschlagen mit Licht in einem im UV-Spektralbereich liegenden ersten Wellenlängenbereich verfärbt und der sich bei Beaufschlagen mit Licht, dessen Wellenlänge in einem zu dem ersten Wellenlängenbereich komplementären zweiten Wellenlängenbereich liegt, nicht oder anders verfärbt,
wobei der Farbstoff auf oder in dem Brillenglaskörper (30) anschließend lokal entfernt oder ausgedünnt wird oder das Molekülgitter eines den Farbstoff auf oder in dem Brillenglaskörper (30) aufnehmenden Matrixmaterials versteift wird.

**2.** Verfahren nach Anspruch 1, **dadurch gekennzeichnet, dass** der Fabstoff (31) in dem Detektormaterial (28) ein photochromer Farbstoff (31) ist, der bei Beaufschlagen mit UV-Licht eine reversible Veränderung seiner Farbe erfährt.

**3.** Verfahren nach Anspruch 2, **dadurch gekennzeichnet, dass** der photochrome Farbstoff (31) ein Material aus der Gruppe photochromer Spiropyran-Farbstoff, Spirooxazin-Farbstoff, und/oder ein Farbstoff mit der Strukturformel

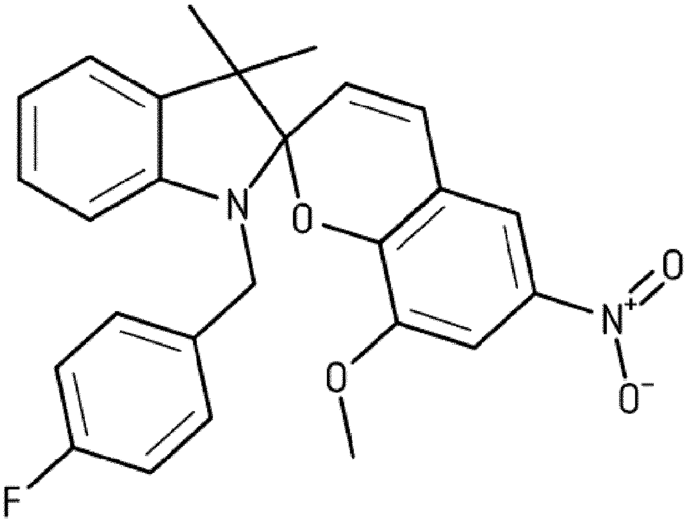

oder mit der Strukturformel

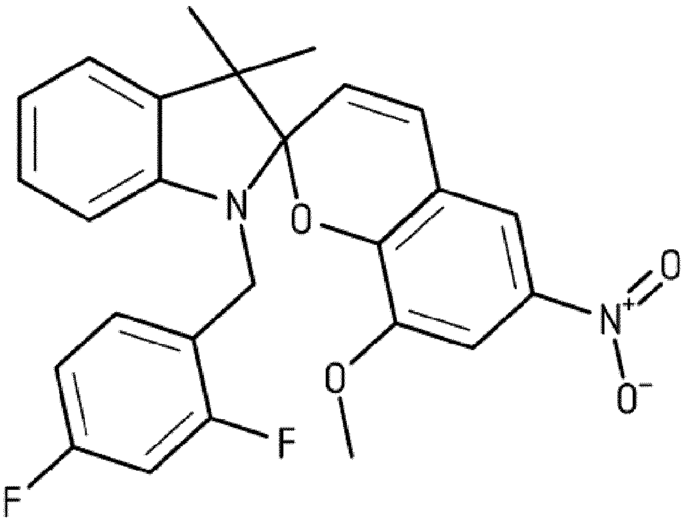

oder mit einer zu den vorstehenden Strukturformeln modifizierten Strukturformel ist, in der es andere Ringbildner und entsprechende Substituenten gibt;
oder ein Farbstoff mit der Strukturformel

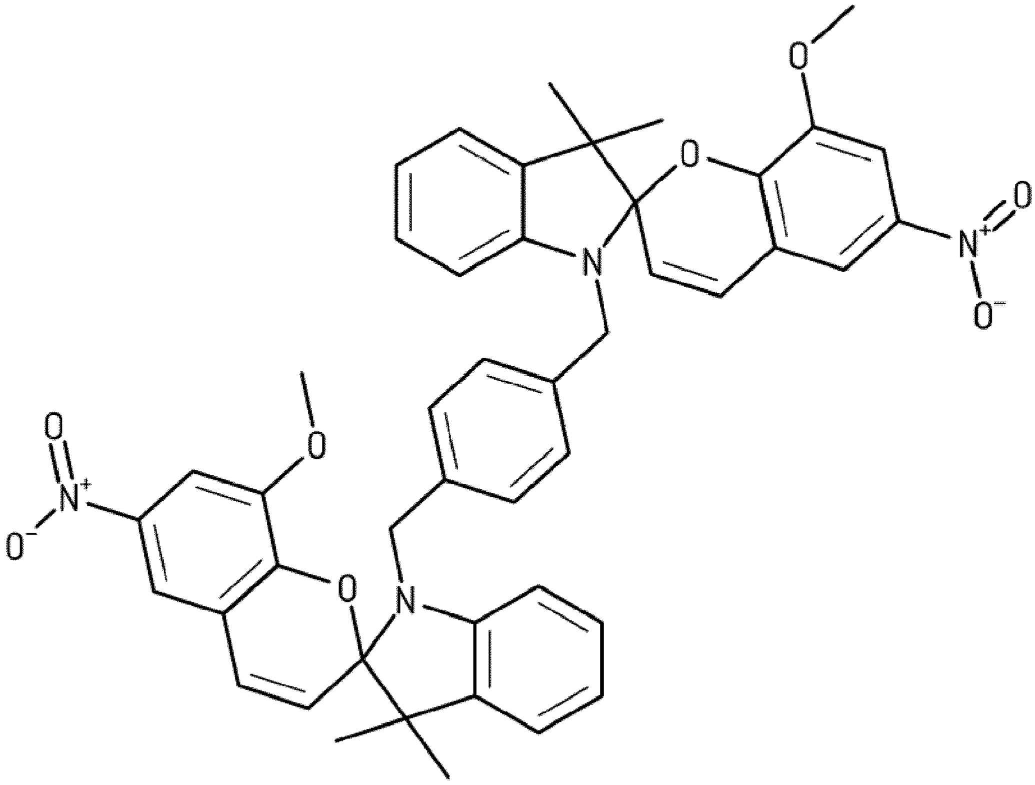

ist.

4. Verfahren nach Anspruch 3, **dadurch gekennzeichnet, dass** das Detektormaterial (28) ein den photochromen Farbstoff (28) aufnehmendes Matrixmaterial (33) aus einem organischen Polymer enthält.

5. Verfahren nach Anspruch 4, **dadurch gekennzeichnet, dass** das Verhältnis des photochromen Farbstoffs (28) zu dem den photochromen Farbstoff aufnehmenden Matrixmaterial (33) in einem Bereich zwischen etwa 2 und etwa 75 Gewichts-%, basierend auf dem Gesamtgewicht des photochromen Farbstoffs (28) und des den photochromen Farbstoff aufnehmenden Matrixmaterials (33) liegt.

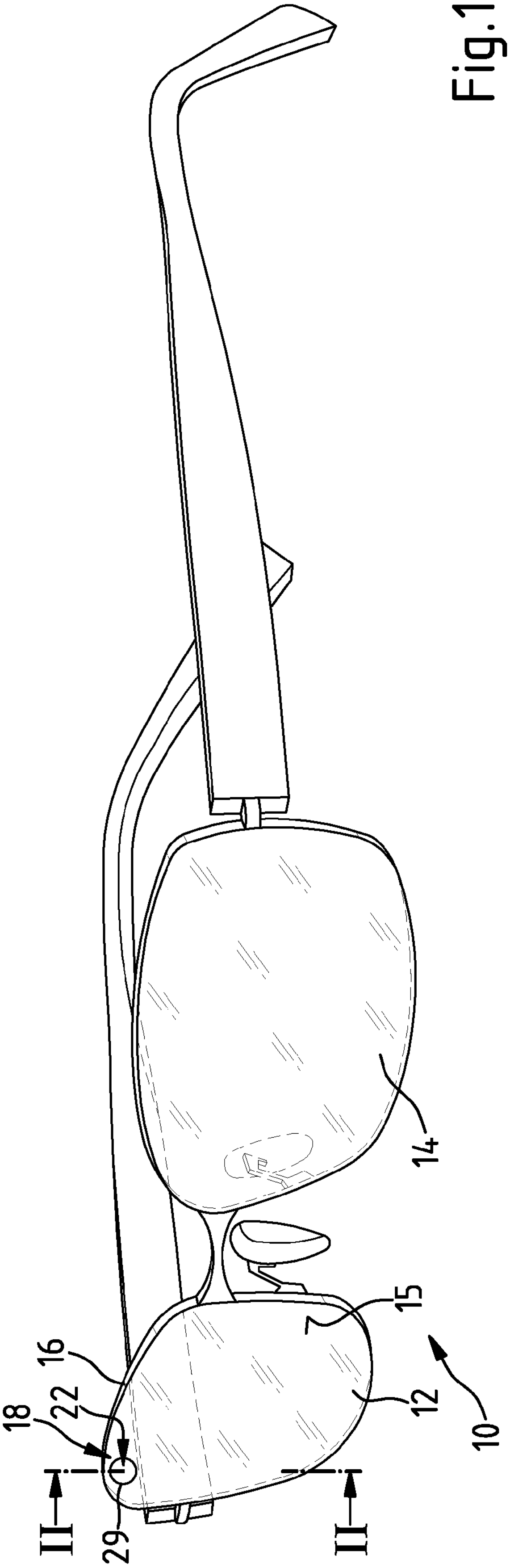


Fig.1

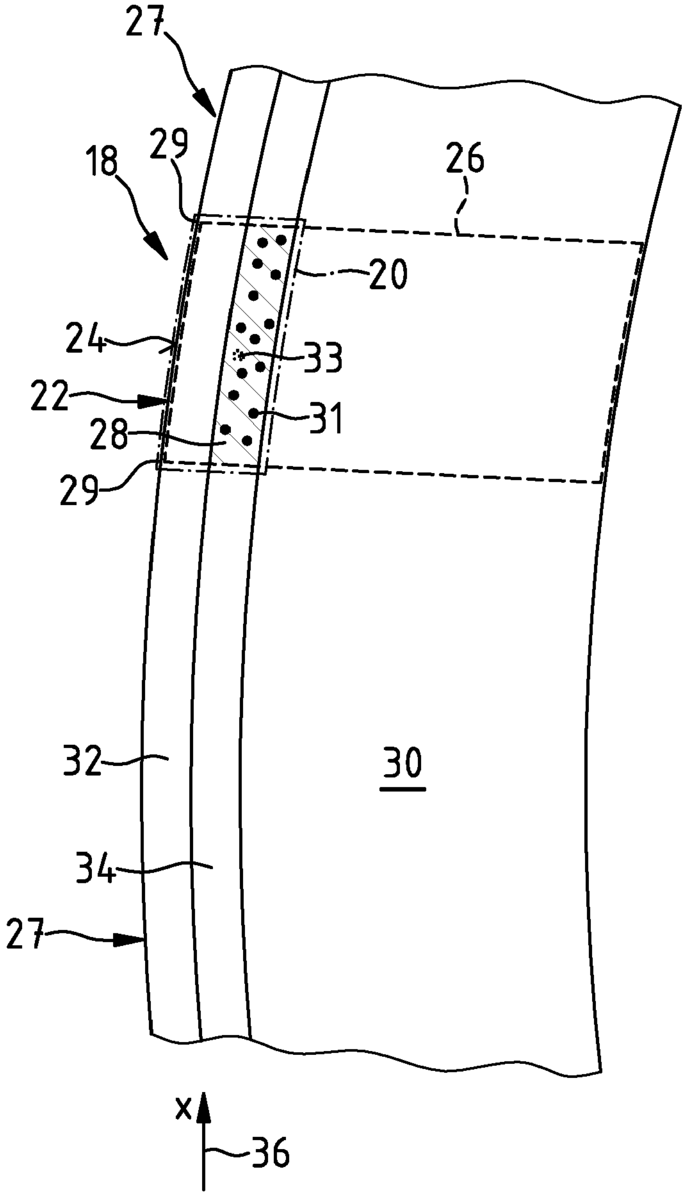


Fig.2

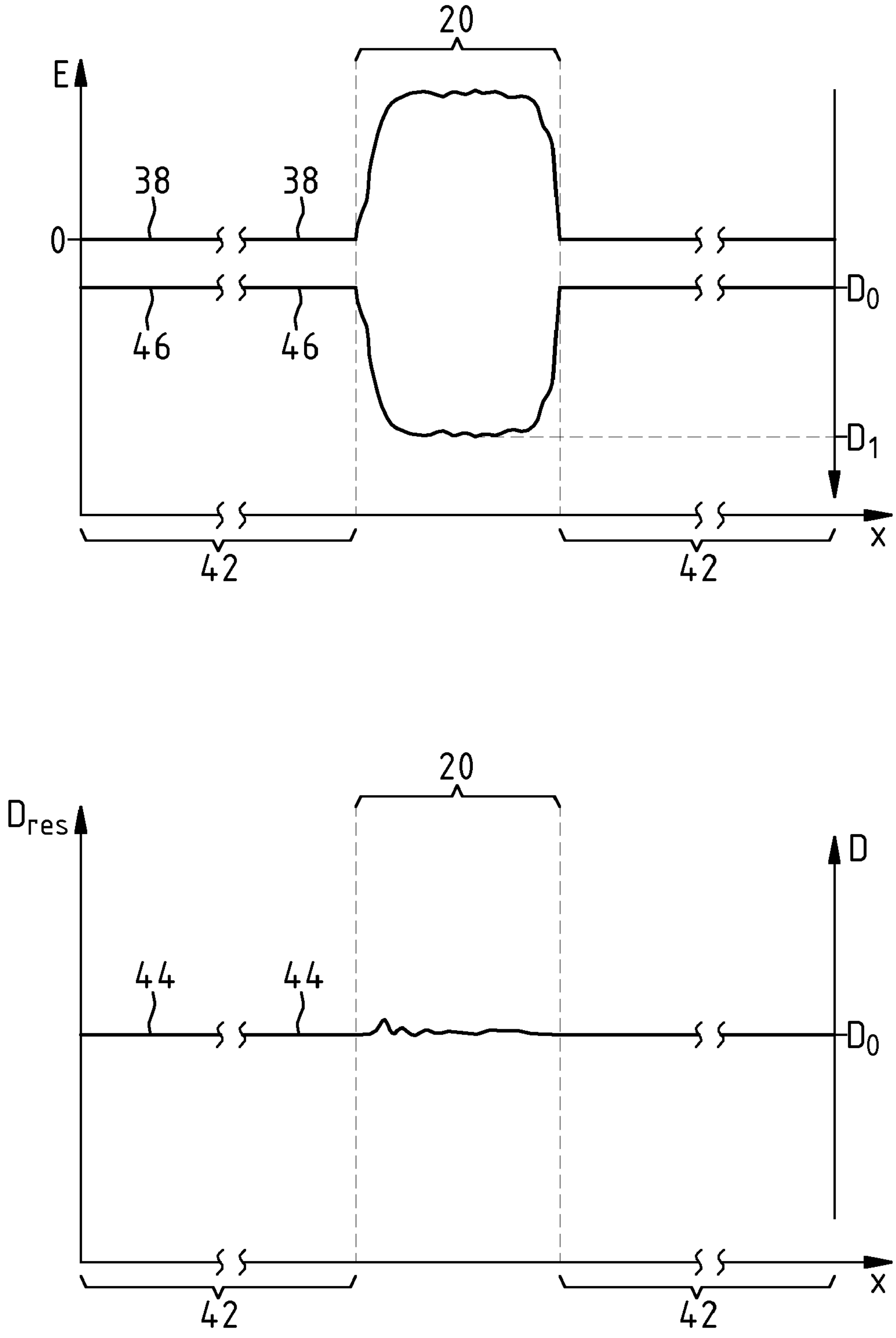


Fig.3

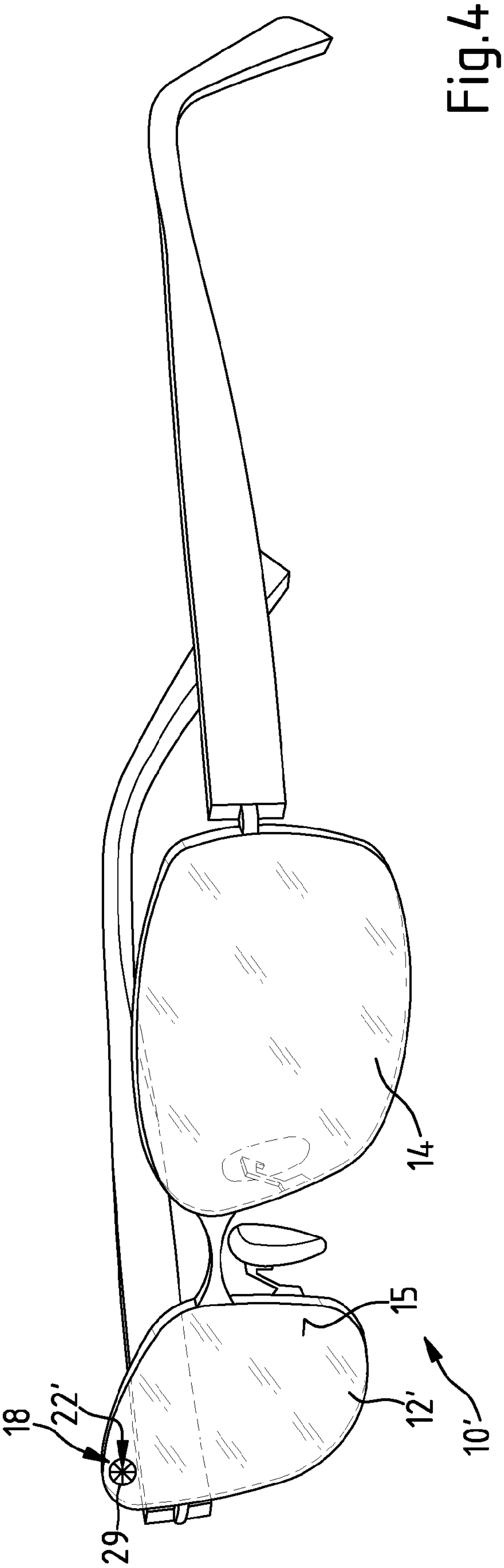


Fig.4

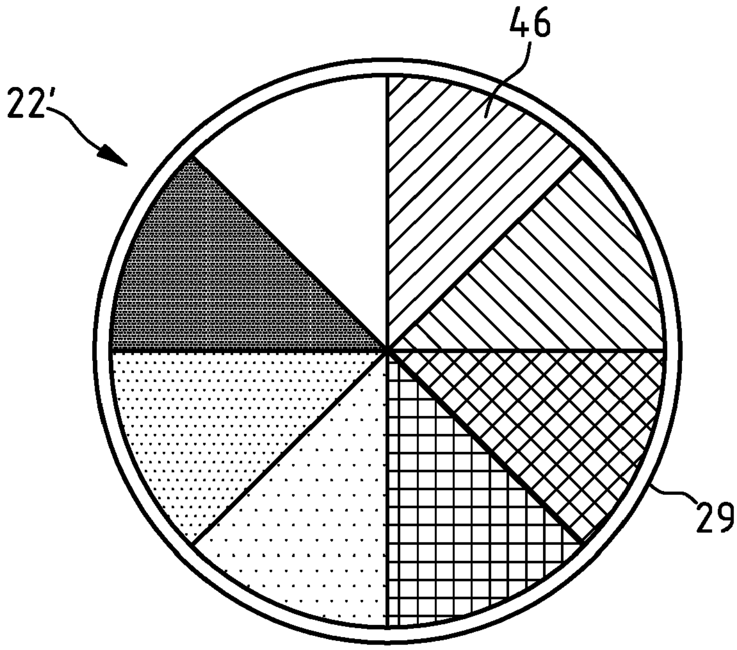


Fig.5

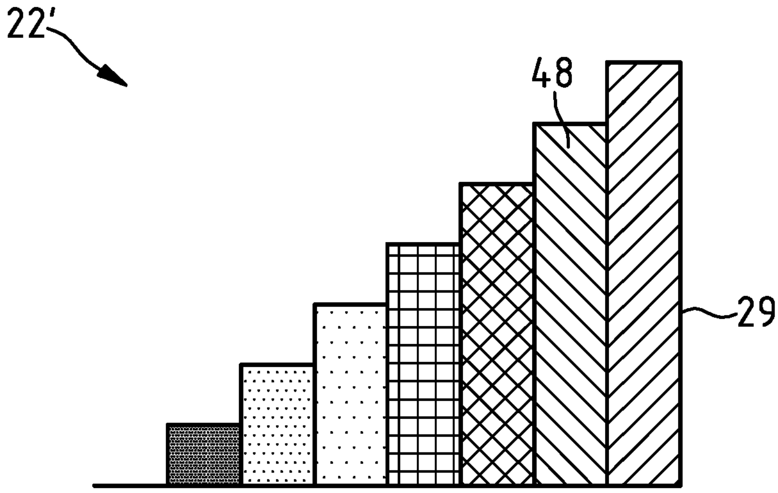


Fig.6

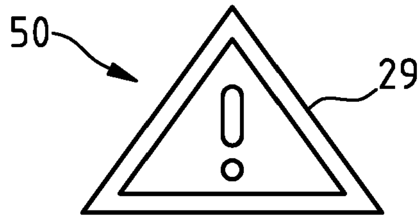


Fig.7

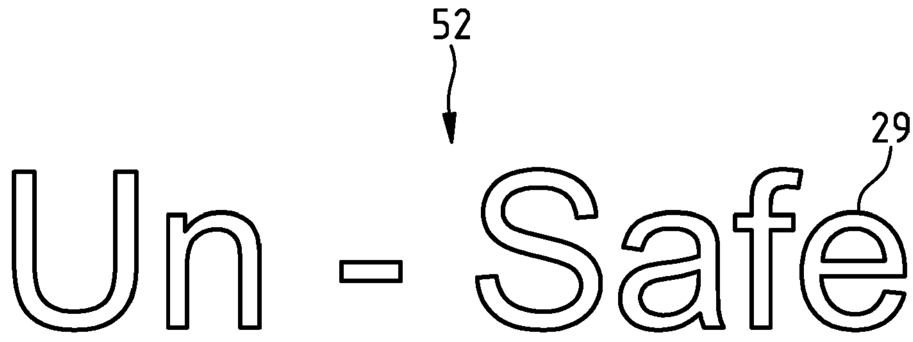


Fig.8

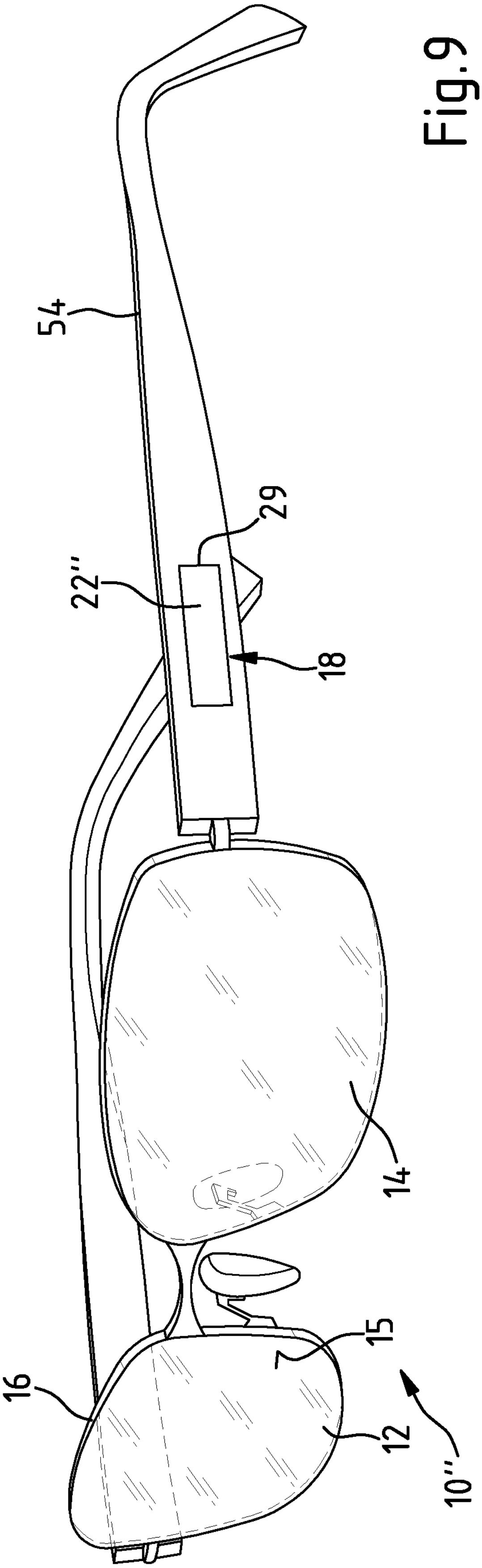


Fig.9

Europäisches Patentamt
European Patent Office
Office européen des brevets

# EUROPÄISCHER RECHERCHENBERICHT

Nummer der Anmeldung
EP 16 20 6865

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | WO 2011/058431 A2 (LINCOLN GLOBAL INC [US]; CHANTRY BRUCE JOHN [US]; MCDOWELL MARK DAVID) 19. Mai 2011 (2011-05-19)<br>* Absätze [0028], [0033], [0040], [0046], [0047]; Abbildungen 6A, 6B * | 1-5,8-12<br>6,7 | INV.<br>G02C7/02<br>G02C7/10<br>G02C11/00 |
| X | US 2014/041105 A1 (ZEMLAK MASON [CA]) 13. Februar 2014 (2014-02-13)<br>* Absatz [0013] - Absatz [0020]; Abbildungen 2A, 2B, 2C * | 1-3 | |
| X | DE 20 2007 004280 U1 (CHENG LUNG PIN [TW]) 9. August 2007 (2007-08-09)<br>* Absatz [0005] - Absatz [0006]; Abbildungen 1-4 * | 1 | |
| X | US 3 597 054 A (WINTER PETER MCGOWIN) 3. August 1971 (1971-08-03)<br>* Spalte 1, Zeile 47 - Spalte 2, Zeile 55; Abbildungen 1-5 * | 1-4 | |
| Y,D | EP 2 358 840 B1 (BASF SE [DE]) 26. Dezember 2012 (2012-12-26)<br>* Absatz [0019] * | 6,7 | RECHERCHIERTE SACHGEBIETE (IPC)<br>G02C |
| X | WO 2016/144333 A1 (TRANSITIONS OPTICAL INC [US]) 15. September 2016 (2016-09-15)<br>* Absatz [0007] * | 13,14 | |
| X | GB 1 520 099 A (AMERICAN OPTICAL CORP) 2. August 1978 (1978-08-02)<br>* Seite 3, Zeile 23 - Seite 4, Zeile 1 * | 13,14 | |
| X | US 3 419 370 A (CRAMER WILLIAM H ET AL) 31. Dezember 1968 (1968-12-31)<br>* Spalte 6, Zeile 64 - Zeile 68 * | 13,14 | |
| | -/-- | | |

Der vorliegende Recherchenbericht wurde für alle Patentansprüche erstellt

3

| Recherchenort | Abschlußdatum der Recherche | Prüfer |
|---|---|---|
| München | 5. Mai 2017 | Albero Silvestre, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Seite 1 von 2

Europäisches Patentamt
European Patent Office
Office européen des brevets

# EUROPÄISCHER RECHERCHENBERICHT

Nummer der Anmeldung
EP 16 20 6865

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/231839 A1 (SU KAI C [US] ET AL) 20. August 2015 (2015-08-20) * Absatz [0009] - Absatz [0037] * | 13,14 | |
| X | US 5 260 727 A (OKSMAN HENRY C [US] ET AL) 9. November 1993 (1993-11-09) * Spalte 3, Zeile 64 - Spalte 4, Zeile 10 * | 13,14 | |
| A | KR 2009 0118149 A (MYUNG NO HYUN [KR]) 18. November 2009 (2009-11-18) * das ganze Dokument * | 1 | |
| A | US 2016/320637 A1 (MIYOSHI KAZUYUKI [JP]) 3. November 2016 (2016-11-03) * das ganze Dokument * | 9,13,14 | |
| A | WO 2008/037076 A1 (LUVGEAR INC [CA]; MILLER NEIL [CA]) 3. April 2008 (2008-04-03) * das ganze Dokument * | 3,10,11 | |

RECHERCHIERTE SACHGEBIETE (IPC)

Der vorliegende Recherchenbericht wurde für alle Patentansprüche erstellt

3

| Recherchenort | Abschlußdatum der Recherche | Prüfer |
|---|---|---|
| München | 5. Mai 2017 | Albero Silvestre, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 16 20 6865

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-05-2017

| Im Recherchenbericht angeführtes Patentdokument | Datum der Veröffentlichung | Mitglied(er) der Patentfamilie | Datum der Veröffentlichung |
|---|---|---|---|
| WO 2011058431 A2 | 19-05-2011 | AU 2010317555 A1 | 24-05-2012 |
| | | CA 2779405 A1 | 19-05-2011 |
| | | CN 102869473 A | 09-01-2013 |
| | | EP 2498945 A2 | 19-09-2012 |
| | | JP 2013510724 A | 28-03-2013 |
| | | JP 2014239894 A | 25-12-2014 |
| | | KR 20120099463 A | 10-09-2012 |
| | | US 2011116076 A1 | 19-05-2011 |
| | | WO 2011058431 A2 | 19-05-2011 |
| US 2014041105 A1 | 13-02-2014 | KEINE | |
| DE 202007004280 U1 | 09-08-2007 | KEINE | |
| US 3597054 A | 03-08-1971 | KEINE | |
| EP 2358840 B1 | 26-12-2012 | EP 2358840 A1 | 24-08-2011 |
| | | ES 2400585 T3 | 10-04-2013 |
| | | US 2011293908 A1 | 01-12-2011 |
| | | WO 2010037660 A1 | 08-04-2010 |
| WO 2016144333 A1 | 15-09-2016 | KEINE | |
| GB 1520099 A | 02-08-1978 | DE 2712859 A1 | 03-11-1977 |
| | | FR 2349149 A1 | 18-11-1977 |
| | | GB 1520099 A | 02-08-1978 |
| | | JP S5946365 B2 | 12-11-1984 |
| | | JP S52128156 A | 27-10-1977 |
| US 3419370 A | 31-12-1968 | DE 1596764 B1 | 18-03-1971 |
| | | GB 1172503 A | 03-12-1969 |
| | | NL 6616020 A | 23-05-1967 |
| | | US 3419370 A | 31-12-1968 |
| US 2015231839 A1 | 20-08-2015 | US 2015231839 A1 | 20-08-2015 |
| | | WO 2015127091 A1 | 27-08-2015 |
| US 5260727 A | 09-11-1993 | US 5260727 A | 09-11-1993 |
| | | WO 9402878 A1 | 03-02-1994 |
| KR 20090118149 A | 18-11-2009 | KEINE | |
| US 2016320637 A1 | 03-11-2016 | JP 2016206561 A | 08-12-2016 |
| | | US 2016320637 A1 | 03-11-2016 |
| WO 2008037076 A1 | 03-04-2008 | CA 2664623 A1 | 03-04-2008 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 16 20 6865

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-05-2017

| Im Recherchenbericht angeführtes Patentdokument | Datum der Veröffentlichung | Mitglied(er) der Patentfamilie | Datum der Veröffentlichung |
|---|---|---|---|
| | | GB 2458032 A | 09-09-2009 |
| | | US 2010012017 A1 | 21-01-2010 |
| | | WO 2008037076 A1 | 03-04-2008 |

EPO FORM P0461

Für nähere Einzelheiten zu diesem Anhang : siehe Amtsblatt des Europäischen Patentamts, Nr.12/82

Seite 2 von 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 7500746 B1
- DE 3622871 A1
- US 5728758 A
- US 5624757 A
- DE 4220251 A1
- US 4556605 A
- EP 2358840 B1
- US 20120268828 A1
- US 8576471 B2
- US 8044141 B2